# EUROPEAN PATENT SPECIFICATION

(11) **EP 0 424 140 B1**
(45) Date of publication and mention of the grant of the patent: **25.05.1994**
(21) Application number: 90311427.0
(22) Date of filing: 18.10.1990
(51) Int. Cl.: G04C 3/12, H01L 41/09

(54) **Electronic timepiece**
Elektronische Uhr
Pièce d'horlogerie électronique

(30) Priority: 20.10.1989 JP 273082/89; 01.11.1989 JP 128181/89 U; 05.07.1990 JP 71804/90 U; 06.07.1990 JP 178712/90; 26.07.1990 JP 79682/90 U
(43) Date of publication of application: 24.04.1991
(73) Proprietor: SEIKO EPSON CORPORATION, Shinjuku-ku Tokyo (JP)
(72) Inventor: Miyazawa, Osamu c/o Seiko Epson Corporation, Suwa-shi, Nagano-ken (JP); Maruyama, Akihiko c/o Seiko Epson Corporation, Suwa-shi, Nagano-ken (JP); Kitahara, Joji c/o Seiko Epson Corporation, Suwa-shi, Nagano-ken (JP)
(74) Representative: Sturt, Clifford Mark

(56) References cited:
- JAPANESE JOURNAL OF APPLIED PHYSICS, SUPPLEMENTS. vol. 26, no. 26-1, 1987, Tokyo, JP, pages 191-193; TAMOTU IIJIMA et al: "Ultrasonic motor using flexural standing wave"
- PATENT ABSTRACTS OF JAPAN, vol. 12, no. 189 (E-616), June 2, 1988 & JP-A-62293980
- PATENT ABSTRACTS OF JAPAN, vol. 13, no. 348 (E-799), August 4, 1989 & JP-A-1107678

## Description

The present invention relates to an electronic watch or other timepiece employing an ultrasonic motor as a transducer.

In JAPANESE JOURNAL OF APPLIED PHYSICS, SUPPLEMENTS, vol. 26, no. 26-1, 1987, TOKYO JA pages 191-193; TAMOTU IIJIMA ET AL: "ULTRASONIC MOTOR USING FLEXURAL STANDING WAVE", there is disclosed an ultrasonic motor comprising a stator which is vibrated by a standing wave. The stator has projections which engage a rotor so as to drive the latter.

In PATENT ABSTRACTS OF JAPAN vol. 12, no. 189 (E-616) June 2, 1988 & JP-A-62 293 980 (CANON INC.) December 21, 1987, there is disclosed a drive circuit for an ultrasonic motor which employs both a travelling oscillatory wave and a standing wave.

In PATENT ABSTRACTS OF JAPAN vol. 13, no. 348 (E-799) August 4, 1989 & JP-A-1 107 678 (MARCON ELECTRON CO. LTD) April 25, 1989, there is disclosed an ultrasonic motor which has an annular stator provided with a plurality of angularly spaced apart projections which engage the rotor.

An electronic watch has been proposed in which an ultrasonic motor is used as a transducer and in which a travelling wave is applied to vibrators to drive a rotor. With this type of ultrasonic motor, however, the amount of movement which is imparted to its rotor inevitably involves an error. For example, where the motor is caused to rotate at the rate of 6° per second, the rotation involves an error of several % and the error accumulates so that the accuracy of the watch deteriorates. For this reason, it has been proposed to employ a rotary encoder to cancel the errors, but the mounting of such an encoder has been difficult in the case of electronic watches where there has been a demand for miniaturization.

According to one aspect of the present invention, there is provided an electronic timepiece having an ultrasonic motor comprising a stator provided with vibrator means for exciting the stator; a rotor arranged to drive time indicating means of the timepiece, the rotor and/or the stator having at least one portion which in operation engages the other member so that the rotor is driven by the stator; and drive control means arranged to impress waves on said vibrator means so as to drive the rotor characterised in that the vibrator means comprise a plurality of vibrators, the drive control means being arranged to apply a standing wave to each of the vibrators and to effect phase shifting of said wave so as to drive the rotor in a stepwise manner.

Resilient means are preferably provided to urge the rotor and stator into contact with each other.

The motor may comprise a circuit board having a plurality of circuit patterns, the said resilient means urging the circuit patterns and electrodes of the vibrators into electrical contact with each other.

The circuit board may be disposed on the same side of the stator as the vibrators.

The stator may have a plurality of equally spaced apart projections, the stator projections having contact surfaces which in operation engage the rotor, the width of each contact surface in the direction of rotation of the rotor being less than the spacing between adjacent stator projections.

The rotor may drive a seconds indicating gear means comprising a fourth wheel which is in a different plane from that of either the rotor or the stator.

The rotor may, moreover, drive a minutes indicating gear means comprising a centre wheel which is disposed at the centre of the timepiece and which is disposed in a different plane from that of the stator.

The centre wheel may drive an hour indicating gear means by way of a minute wheel which is in the same plane as but is spaced from the stator.

The ultrasonic motor may be powered by a battery which is so disposed that the battery and the stator are not placed one above the other.

In one embodiment, the ultrasonic motor and the time indicating means are arranged substantially centrally of the timepiece, the motor being powered by a battery at least a part of which is disposed above the motor.

According to another aspect of the present invention, there is provided an electronic timepiece having an ultrasonic motor comprising a stator provided with vibrator means for exciting the stator; a movable member arranged to drive time indicating means of the timepiece, the movable member and/or the stator having at least one portion which in operation engages the other member so that the movable member is driven by the stator; and drive control means arranged to impress waves on said vibrator means so as to drive the movable member characterised in that the or each said portion is constituted by a projection of the movable member or stator.

The construction may be such that, although the rotor is radially supported only at one place, timepiece hands are driven thereby with stable rotational movement.

In its preferred form, the invention provides an electronic watch having an electrical connection means which ensures an excellent working performance and ease of assembly, preventing any deterioration in the characteristics of the vibrators and producing no effect on the modes of vibration.

In its preferred form, the invention provides an electronic watch in which the rotor has greater torque, greater accuracy, reduced power consumption and reduced voltage, the watch having a thin watch movement.

The electronic watch may be so designed that a battery is mounted above the movement of the watch. This enables there to be a reduction in the size of the movement, while the ultrasonic motor may have a reduced number of component parts.

In one embodiment, a pinion of a smaller diameter than the rotor of the ultrasonic step motor is mounted on the rotor, the rotor being radially positioned by a pivot of the pinion. A spring member presses against the forward end of the pivot to apply a pressure force. By decelerating the drive from the rotor and then driving the hands, the positional accuracy of the hands and the shock impact resistance are improved. Also, due to the fact that the rotor is supported radially at one place, there is no danger of causing any backlash and the assembly of the watch is remarkably improved.

The ultrasonic motor may be provided with an electrical connection means such that the circuit patterns of a circuit board are resiliently pressed against electrodes of the vibrators., By resiliently effecting contact between the electrode patterns and the circuit patterns, the assembly performance is improved. Also, an electrical connection means is achieved in which there is no danger of the characteristics of the vibrators being deteriorated and which has no effect on the vibrations.

In one embodiment, projections are formed on a stator and the vibration nodes produced on the vibrators are shifted intermittently, thereby causing a moving body in contact with the contacting surfaces of the projections to move in a stepwise manner, the contact surface of each projection having a width in the direction of travel of the rotor or other moving, body which width is smaller than the width between the adjacent projections at which there is no such contact. By making the width of each projection of the stator smaller than the gap between the adjacent projections, the stop position accuracy of the moving body is improved, thereby enabling a highly accurate electronic watch to be produced.

The speed may be reduced from an ultrasonic step motor to indicate the seconds, thereby ensuring highly accurate time indication, producing a greater torque, ensuring a reduced voltage and reduced power consumption, and remarkably improving the shock impact resistance.

By arranging a third gear, a minute gear and a battery in positions such that they are not superposed on the stator, miniaturization and thinning of the movement can be achieved so as to enable the watch to be made in many different designs.

The arrangement of the circuit board on the same side of a piezo-electric unit as the stator has the effect of making possible a simplified electrical connection arrangement, a reduced number of components, high reliability and reduced cost.

The battery may be arranged on the upper part of a movement of the watch so that the movement size is smaller than that of a known electromagnetictype motor watch. Moreover, the arrangement of the battery on the upper part of the movement has the effect of simplifying the operation of battery replacement and substantially improving the quality of after sale servicing.

The invention is illustrated, merely by way of example, in the accompanying drawings, in which:-
Figure 1 is a block diagram showing schematically an ultrasonic step motor and drive control means therefor which may be used in an electronic watch or other timepiece according to the present invention;
Figures 2a to 2e respectively illustrate the principles of operation of the ultrasonic step motor of Figure 1;
Figure 3a is a diagram illustrating the case in which the positions of the nodes of the stator of the step motor are shifted;
Figure 3b is a diagram illustrating the manner in which the stator is moved from the Figure 3a position;
Figure 4 is a diagram illustrating the case in which the positions of the nodes are each shifted by λ/4;
Figure 5 is a diagram illustrating the case in which the positions of the nodes are each shifted in excess of λ4;
Figures 6a to 6d illustrate specific methods for shifting the nodes;
Figure 7 is a sectional view showing an ultrasonic step motor which may be used in a timepiece according to the present invention;
Figure 8 is a plan view of the stator and the rotor of the motor of Figure 7;
Figure 9 is a plan view showing another ultrasonic step motor which may be used in a timepiece according to the present invention;
Figure 10 comprises diagrams illustrating the vibration mode stepping driving of the motor of Figure 9;
Figure 11 is a timing chart of the phases of the drive voltages for the modes shown in Figure 10;
Figure 12 is a timing chart of the drive voltages for the motor of Figure 9;
Figure 13 is a plan view showing yet another ultrasonic step motor which may be used in a timepiece according to the present invention;
Figure 14 comprises diagrams illustrating the vibration modes and the positional relationships of the rotor/stator contact portions of the motor of Figure 13;
Figure 15 is a timing chart of the phase of the drive voltages used in the motor of Figure 13;
Figure 16 is a timing chart of the drive voltage used in the motor of Figure 13;
Figure 17 is a circuit diagram of a drive control apparatus for an ultrasonic step motor which may be used in a timepiece according to the present invention;
Figure 18 is a timing chart showing the operation of the apparatus of Figure 17;
Figure 19 is a sectional view showing a first embodiment of an electronic watch according to the present invention employing an ultrasonic step motor as a transducer;
Figure 20 is a sectional view showing a second embodiment of an electronic watch according to the present invention and showing the electrical connection means thereof;
Figure 21 is a plan view showing the relationship between circuit patterns, overhang portions and vibrators of the construction shown in Figure 20;
Figures 22 to 25 and 27 are sectional views showing parts of third to seventh embodiments respectively of an electronic watch according to the present invention and showing the electrical connection means thereof;
Figure 26 is a plan view showing the relationship between the circuit patterns, the overhang portions and the vibrators of Figure 25;
Figure 28 is a top plan view of the stator of an ultrasonic step motor which may be used in an electronic timepiece according to the present invention;
Figure 29 is a diagram showing the operation of the ultrasonic step motor of Figure 28;
Figure 30 is a perspective view showing an example of stator projections of an ultrasonic step motor which may be used in an electronic timepiece according to the present invention;
Figure 31 is a perspective view showing another example of stator projections of an ultrasonic step motor which may be used in an electronic timepiece according to the present invention;
Figure 32 is a plan view of an eighth embodiment of an electronic watch according to the present invention;
Figure 33 is a sectional view showing an ultrasonic motor section and a wheel train section of the electronic watch of Figure 32;
Figure 34 is a sectional view showing the wheel train section and a time correcting section of the electronic watch of Figure 32;
Figure 35 is a sectional view showing the time correcting section of the electronic watch of Figure 32;
Figure 36 is a sectional view showing a battery section and a circuit section of the electronic watch of Figure 32;
Figure 37 is a plan view of a ninth embodiment of an electronic watch according to the present invention;
Figure 38 is a sectional view showing the ultrasonic motor section and the hands section of the electronic watch of Figure 37; and
Figure 39 is a sectional view of the battery section and the circuitry of the electronic watch of Figure 37.

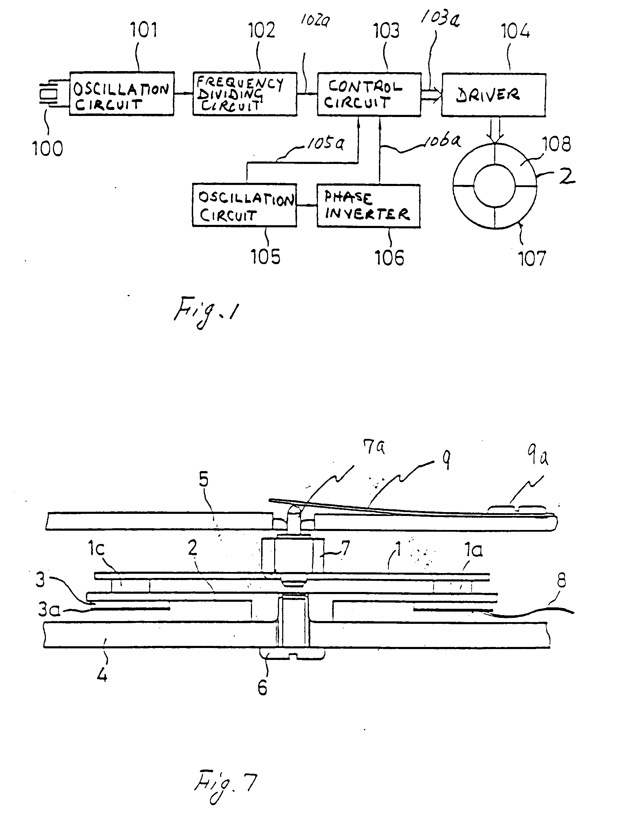

Figure 1 is a block diagram showing schematically an ultrasonic step motor and drive control means therefor which may be used in an electronic watch or other timepiece according to the present invention. In Figure 1, numeral 100 designates a liquid crystal oscillator; 101 a liquid crystal oscillation circuit; and 102 a frequency dividing circuit for dividing the frequency of the output signal from the liquid crystal oscillation circuit 101. Numeral 103 designates a control circuit for receiving and processing the oscillation signals or output signals 105a of an oscillation circuit 105 which oscillates at the same frequency as the resonant frequency of a vibrator unit 107. The control circuit 103 also receives and processes output signals 106a from a phase inverter circuit 106 for inverting the phase of the oscillation signals of the oscillation circuit 105 so that drive control signals are transmitted from the control circuit 103. Numeral 104 designates a driver for amplifying the drive control signals from the control circuit 103 so as to apply drive voltages to the vibrator unit 107. Numeral 108 designates individual vibrators of the unit. As shown in Figure 1, the vibrator unit 107 may, for example, have four vibrators 108, each vibrator 108 being arranged to be vibrated independently of the others.

The output signals 106a of the phase inverting circuit 106 are opposite in phase to the output signals 105a. Numeral 102a designates the output signals of the frequency dividing circuit 102 which are transmitted to the control circuit 103 and which serve as control signals for controlling the output signals 105a and the oppositely phased signals 106a. Numeral 103a designates the output signals of the control circuit 103 which serve as drive control signals for driving the vibrator unit 107.

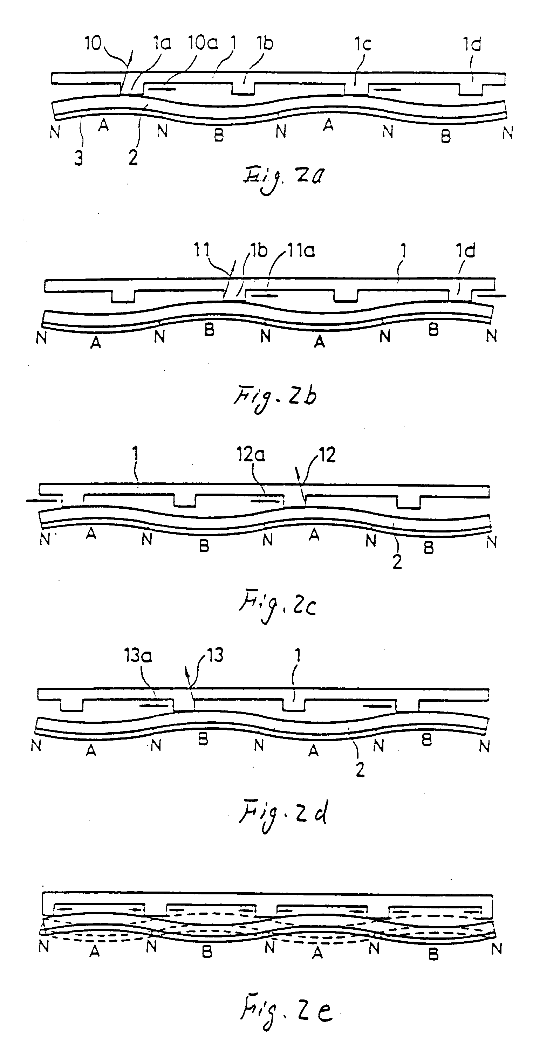

Figures 2a to 2e respectively illustrate the principles of operation of the ultrasonic step motor of Figure 1 and the latter will be described on the basis of an embodiment in which piezo-electric elements are used as vibrators.

Figure 2a shows the state of a fixed-phase vibration mode. As shown in Figure 2a, a rotor 1 is formed with projections 1a, 1b, 1c and 1d. A piezo-electric unit 3 is attached to the side of a stator 2 opposite to the rotor 1. The projections 1a and 1c are partially in contact with the stator 2. The piezoelectric unit 3 includes four vibrators which are classified into two groups, A and B. The vibrators A and B are in operation deformed in opposite phase relationship to each other. The symbol N designates the nodes of the vibration mode of the stator 2.

Figure 2b shows the state of the vibration mode of opposite phase to that shown in Figure 2a. In this state, the projections 1b and 1d are partially in contact with the stator 2.

In Figures 2a and 2b, the projections 1a, 1b, etc., of the rotor 1 are spaced apart by the distance, or by a multiple of the distance, between the nodes N of the stator 2. These projections, or the portions thereof contacting the stator 2, are subject to forces 10 and 11 which act in the directions shown by the arrows. At this time, the forces 10 and 11 have components of force which act in the directions from the respective projections and towards the respective adjacent nodes N. In other words, the stator 2 is subjected to forces having the components 10a and 11b or to forces acting towards the nodes N positioned nearby.

Figures 2c and 2d respectively show cases in which the positional relationship of the stator 2 and the rotor 1 is different from that of Figures 2a and 2b, respectively. In these cases, the rotor 1 is subjected to force components 12a and 13a (acting in directions opposite to those of the forces 10a and 11a). The force components 12a and 13a act in the directions indicated by the arrows towards the nodes N positioned nearby, the components 12a and 13a being components of forces 12 and 13, respectively.

Figure 2e is a composite view in which the views of Figures 2a to 2d are superimposed one upon another. It will be seen that in any of these cases the projections 1a to 1d of the rotor 1 are shifted in the direction of the nodes N of the stator 2 and that they are positioned by the nodes N. As a result, if the positions of the nodes N are moved stepwise, the rotor 1 is moved in a stepwise manner, thereby operating as a step motor. This point will be described in greater detail below.

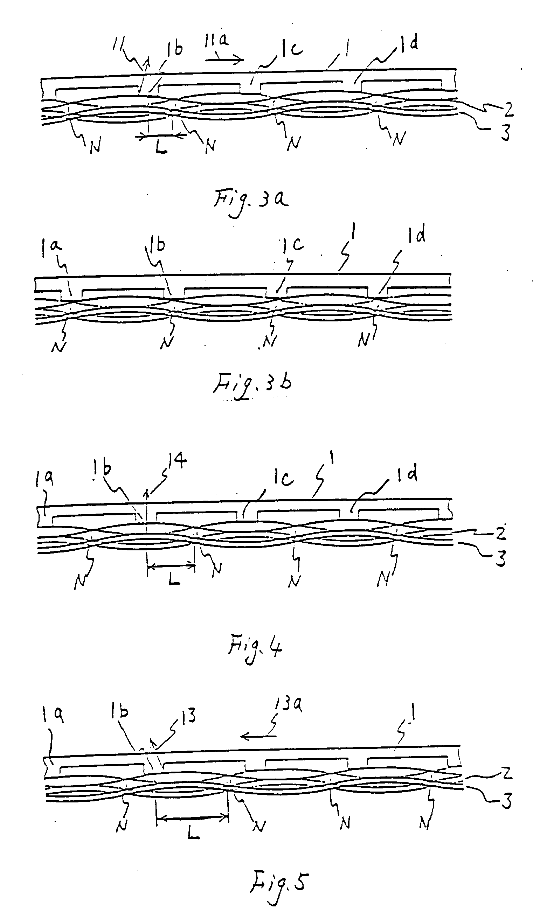

Figure 3a is a diagram showing the case in which the positions of the nodes N of the stator 2 in Figure 2e are each shifted and the amount of shift L of each node N is less than λ4, where λ is the length of one wavelength of the vibration.

Figure 3b shows the case in which the rotor 1 is moved from the position of Figure 3a. In Figure 3a, the rotor 1 is subjected to the force 11 as mentioned previously so that the rotor 1 is moved in the direction of the force 11a and the projections 1a to 1d are moved to and stopped at the positions of the respective nodes N.

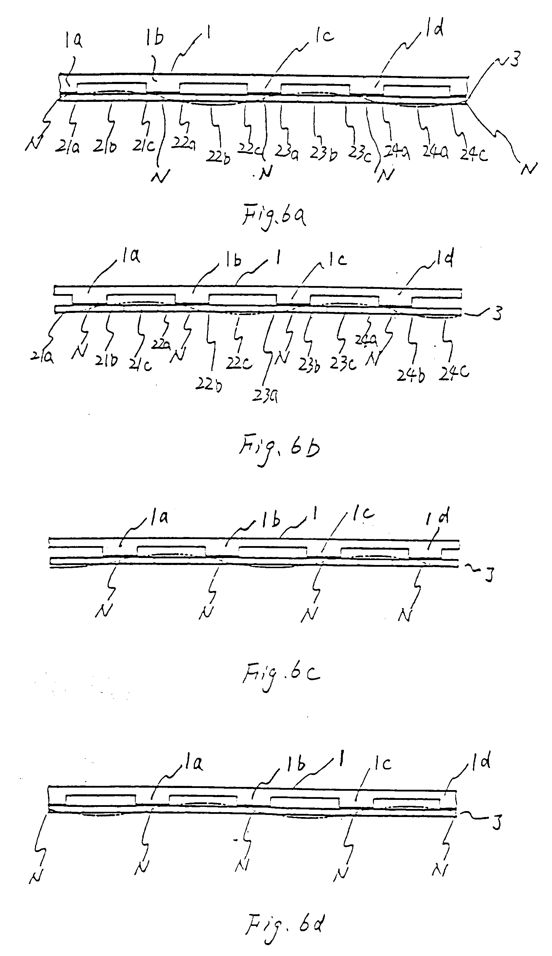

Figure 4 illustrates a case in which the positions of the nodes N in Figure 2e are each shifted by L = λ/4. A vertical force 14 acts on the projections 1a and 1c, or 1b and 1d, of the rotor 1 so that the rotor 1 is not rotated and it vibrates vertically in unstable condition.

Figure 5 illustrates a case in which the positions of the nodes N in Figure 2e are each shifted by L>λ/4. The force 13 acting on the rotor 1 now acts in the direction shown, and thus the rotor 1 is moved in the opposite direction 13a to the direction in which the nodes N are shifted.

As described in detail hereinabove, by setting the amount of shift L of the nodes N to L<λ/4, it is possible to move the position of the rotor stably to any desired position.

It is to be noted that, depending on the method of driving the stator 2, the amount of shift of the nodes N can be set for example to λ/2<L<3λ/4. In such a case, however, because another node exists at the position of λ/2, the above expression is substantially equivalent to 0<L<λ/4.

Figures 6a to 6d are diagrams showing specific methods of shifting the nodes as mentioned previously, each of these Figures illustrating in part a case in which the vibrator of Figure 2 is divided into three parts. The piezo-electric unit 3 is composed of vibrators 21a, 21b, 21c; 22a, 22b, 22c; 23a, 23b, 23c; 24a, 24b, 24c; etc. While in practice the piezo-electric unit 3 is formed by attaching it to the stator 2 as in Figure 2, in Figures 6a to 6d the stator 2 is omitted. Also, the present invention is not limited to using a piezo-electric unit as a vibrator means, and it is possible to use any other device provided it includes vibrators which are each capable of making vibration displacements separately. For instance, a super-magnetic striction device or an electro-striction device can be used.

In Figure 6a, the vibrators 21a, 21b, 21c, 23a, 23b, and 23c form one group, and the vibrators 22a, 22b, 22c, 24a, 24b and 24c form another group. The two groups are driven so that they are deformed in opposite directions respectively. Thus, in the vibration condition, a node N is formed between the vibrators 21c and 22a, between the vibrators 22c and 23a, between the vibrators 23c and 24a, and at each of the ends of the piezo-electric unit 3. As a result, each of the projections 1a to 1d of the rotor 1 is stabilized at a position corresponding to one of the nodes N. In Figures 6a to 6d, each of the broken lines shows the form of the vibration mode at a certain instant.

Referring now to Figure 6b, the vibrators 21b, 21c, 22a, 23b, 23c and 24a form a group and the vibrators 22b, 22c, 23a, 24b, 24c and 21a form another group. As the vibrators are driven such that the two groups are deformed in opposite directions to each other, a node N is formed between the vibrators 21a and 21b, between the vibrators 22a and 22b, between the vibrators 23a and 23b, and between the vibrators 24a and 24b. As compared with Figure 6a, the position of each node N is shifted to the right by an amount corresponding to one vibrator, so that the contact positions of the projections 1a to 1d and the position of the rotor 1 is changed in a stepwise manner. By thus successively changing the vibration mode as shown in Figures 6c and 6d, the rotor 1 is moved stepwise.

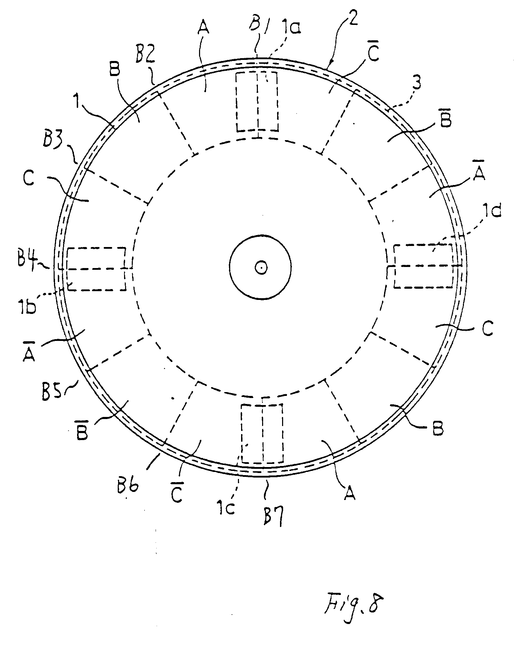

Figure 7 is a sectional view showing by way of example the construction of an ultrasonic step motor applied to a rotary-type motor, and Figure 8 is a plan view of the rotor and stator shown in Figure 7. As shown, numeral 4 designates a base plate to which a stator 2 is fixed with a screw 6; 5 is a wheel train support in which the rotor 1 is rotatably mounted; 7 is a pinion for transmitting the rotational force of the rotor 1; and 8 are lead wires for applying voltages to electrode patterns 3a of the piezo-electric unit 3. In this embodiment, projections 1a to 1d are selectively formed on the rotor 1 in the thickness direction thereof. A pivot or shaft 7a of the pinion 7 is fixed in place by the wheel train support 5 and it is also pressed by a pressure spring 9, the latter being fixed in place by a fastening screw 9a. A frictional force is therefore produced between the projections 1a to 1d of the rotor 1 and the stator 2.

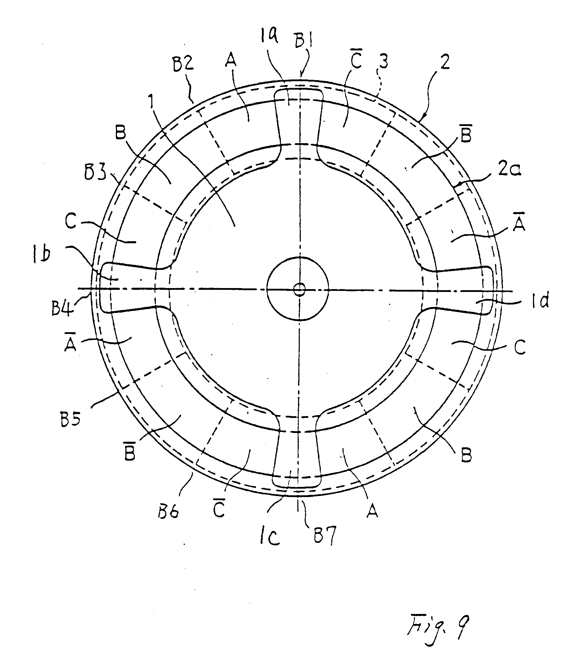

Figure 9 is a plan view of another embodiment of an ultrasonic step motor in the form of a rotary-type motor which may form part of a timepiece according to the present invention. In this embodiment, a projection 2a is formed along the whole circumference of the stator 2 in the thickness direction thereof, and projections 1a to 1d are formed on a rotor 1 to project diametrically thereof.

Each of the constructions illustrated in Figures 7 and 9 shows a case in which the rotor 1 and the stator 2 are brought into contact at four places (at the places of the four projections 1a-1d). Also, in each of the constructions, a vibrating unit composed of a piezoelectric unit 3 includes twelve vibrators as shown by the broken lines, and these vibrators are respectively designated by symbols A, B, C, A̅, B̅, C̅, the same drive voltage being applied to each pair of the same symbol. The symbols B1 to B7 are applied in sequence to the possible positions of the nodes of the vibrations. In this embodiment, the nodes are formed at four places and the number of places where nodes can be formed along the whole circumference of the stator 2 is twelve.

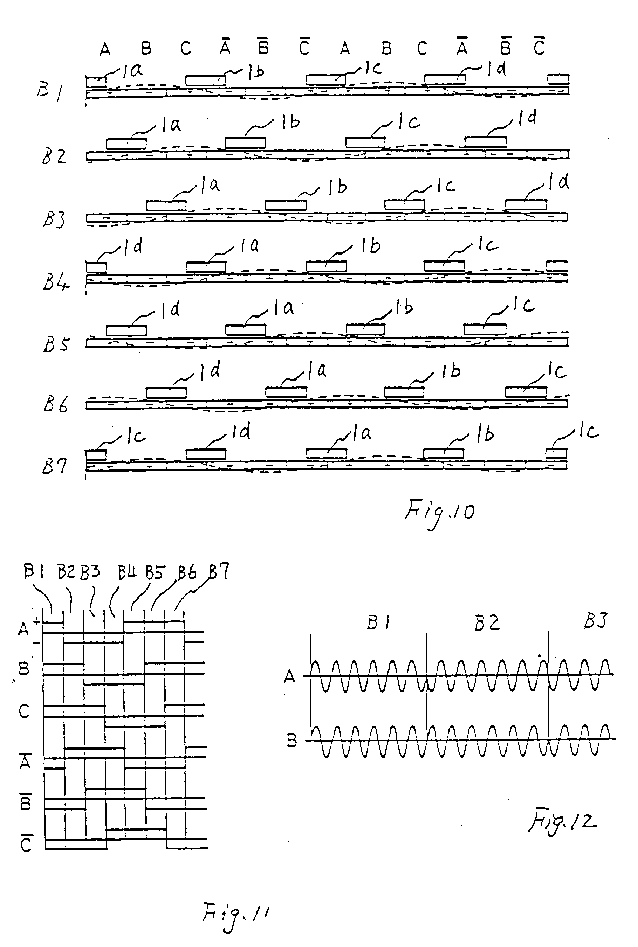

Figure 10 comprises diagrams illustrating the ultrasonic step motor of Figure 9 being driven stepwise, these diagrams being linearly developed for purposes of description with symbols corresponding to those of Figure 9. The broken lines show the forms of the vibration modes. The phase conditions of the voltages applied to the respective vibrators at these moments are indicated by the signs "+" and "-" for purposes of simplification.

In the vibration mode B₁, the vibrators A, B and C, and the vibrators A̅, B̅ and C̅, respectively form groups which vibrate with a 180-degree phase difference therebetween. Therefore the projections 1a, 1b, 1c and 1d of the rotor 1 are placed in the illustrated positions.

In the vibration mode B₂, the vibrators B, C and A̅, and the vibrators B̅, C̅ and A respectively form groups. Moreover, in the vibration mode B₃, the vibrators C, A̅ and B̅, the vibrators C̅, A and B respectively form groups. In this way, the vibration modes B₃ to B₆ are repeated and the rotor 1 is moved in a stepwise manner. In the case of the rotary type motor shown in Figure 9, one rotation consists of twelve steps.

On the contrary, if the rotor is moved in steps in the opposite direction to the illustrated vibration modes B₁ to B₆ that is if switching is effected so that the vibration mode B₂ is obtained after the vibration mode B₃, the rotor 1 is moved in a direction opposite to the previously mentioned case.

As is apparent from the description of Figure 10, it will be seen that this ultrasonic step motor can be easily constructed as a linear motor.

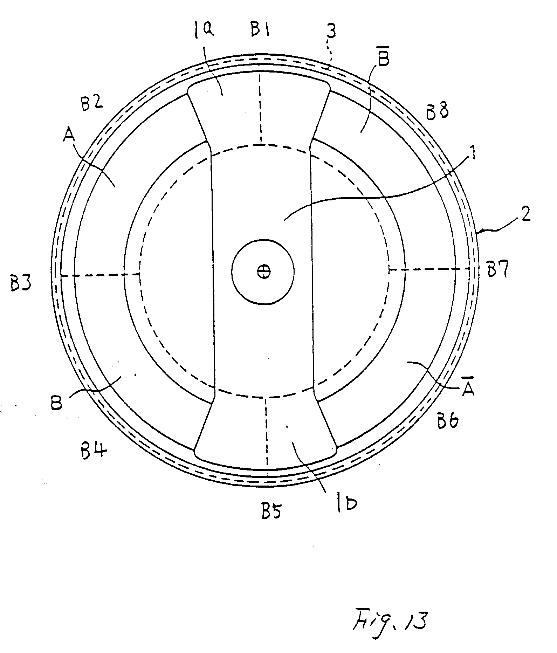

Figure 11 is a timing chart of the phases for providing the vibration modes shown in Figure 10. For instance, in order to produce the vibration modes B₁, drive voltages having a positive (+) phase are applied to the vibrators A, B and C and drive voltages having a negative (-) phase are applied to the vibrators A̅, B̅ and C̅. Control of these voltages is effected by the previously mentioned control circuit 103 so that if the output signal 105a from the oscillation circuit 105 has the positive (+) phase, the oppositely phased output signal 106a of the output signal 105a of the oscillation circuit 105 has the negative (-) phase, and the switching is effected at the timing of the control signal 102a from the frequency dividing circuit 102. It is to be noted that while six different kinds of drive control signals 103a are necessary for the vibrators A, B, C, A̅, B̅, and C̅, there is the inverse relationship between the vibrators A and A̅, between the vibrators B and B̅, and between the vibrators C and C̅, and therefore an equivalent operation can be obtained with three different kinds of drive control signals through the reversing of the direction of polarization.

Figure 12 is a timing chart of the drive voltages applied to the vibrators A and B, respectively, so that, for example, oppositely-phased drive voltages are applied to the vibrators A and B in the vibration mode B₂, and drive voltages of the same phase are applied to the vibrators A and B in the vibration mode B₃ . At this time, the drive voltages in the respective vibration modes are sinusoidal waves and their frequencies are selected to coincide with the resonant frequency of the vibrators attached to the stator.

As will be seen from the foregoing description, the phases of the drive voltages applied to the respective vibrators are suitably switched so as to achieve a step drive in which there are twelve steps or divisions for each complete revolution of the rotor.

Figure 13 is a plan view showing another example of the construction of an ultrasonic step motor which may form part of a timepiece according to the present invention. The vibrator unit 107 (Figure 1) comprises four vibrators A, A̅, B and B̅. The rotor 1 and stator 2 come into contact at the two contact portions provided by the projections 1a and 1b. The number of nodes N is two, and the number of positions where nodes N can be produced is eight.

Figure 14 comprises diagrams illustrating the vibration modes and the positional relationship of the contacting projections 1a and 1d, and Figure 15 is a timing chart of the phases of the drive voltages for producing the vibration modes of Figure 14.

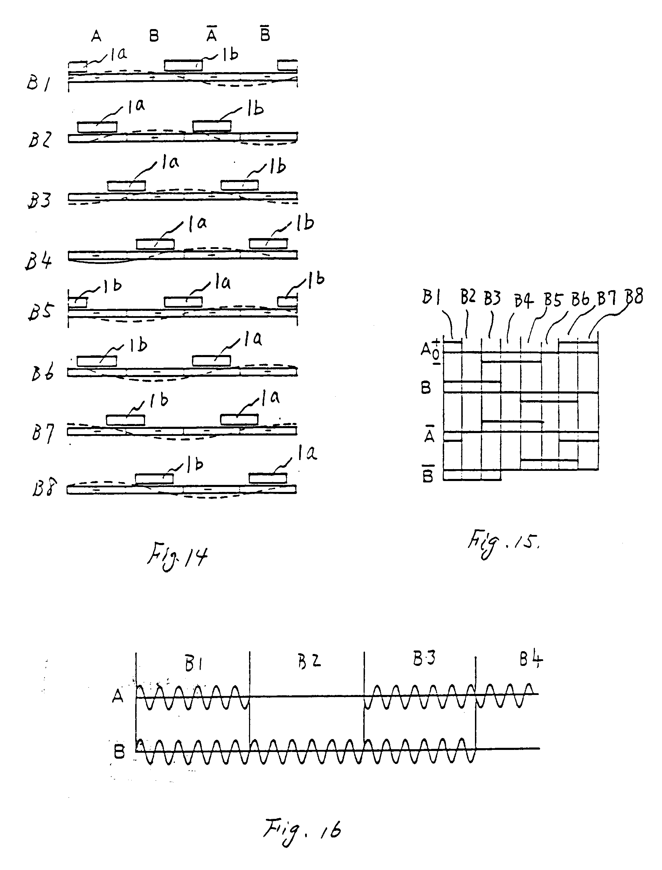

Figure 16 is a timing chart of the drive voltages applied to the vibrators A and B. In Figure 15, the signs "+" and "-" show the oppositely phased conditions and the sign "O" indicates the condition where no drive voltage is applied. As a result, this embodiment provides an ultrasonic step motor of eight division steps per one rotation (1/2 step).

It is to be noted that while the above-described embodiment shows a typical example of the rotary type, the present invention is not limited to its specific construction, forms of vibration or kinds and constructions of vibrators, provided that the rotor is shifted to the driving nodes and that the manner in which the vibrators are driven is sequentially changed, thereby moving the rotor in a stepwise fashion. In addition, the oscillation circuit 105 may be adapted to utilize the output of the liquid crystal oscillator circuit 101 and also it may be a self-excited oscillation circuit which detects the vibrations of the vibrating unit 107 to resonate it under the optimum conditions. Moreover, the control signal 102a is not necessarily based on the signal from the liquid crystal oscillator 100.

Further, after the rotor of the ultrasonic step motor has been moved to a desired position, there is still a frictional force between the rotor and the stator and therefore the stop position of the rotor is maintained even if the driving is stopped.

As described hereinabove, the ultrasonic step motor can be suitably preset with a step angle depending on the number of vibrators and the driving method, and the present invention is in no way limited to the previously mentioned embodiments.

The operating principle of the ultrasonic step motor has been made clear by the foregoing description and its drive control system will now be described.

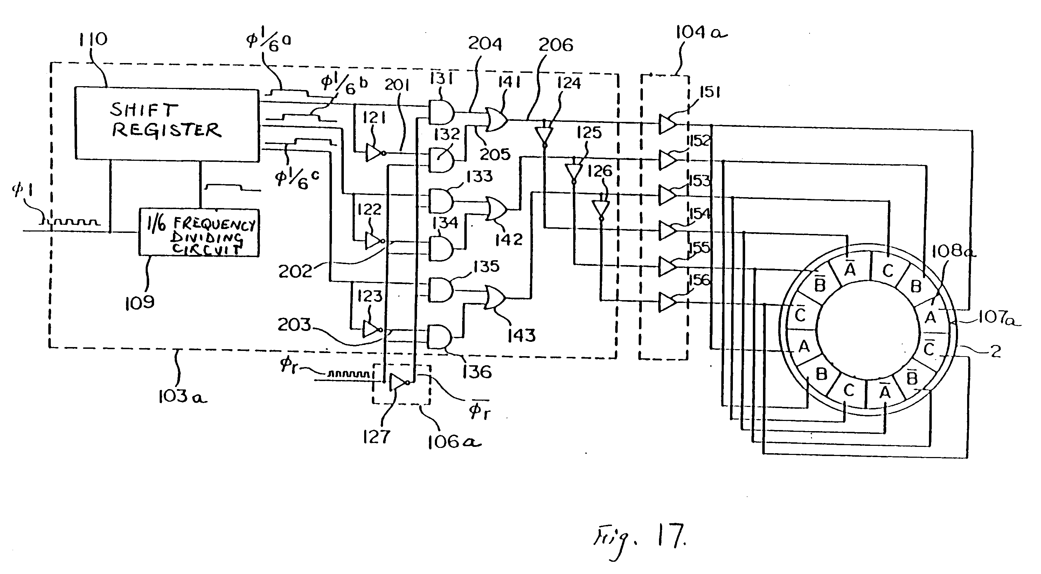

Figure 17 is a circuit diagram of a drive control apparatus for an ultrasonic step motor which may be used in a timepiece according to the present invention. A control circuit 103a includes a 1/6 frequency divider circuit 109; a shift register 110; inverters 121, 122, 123, 124, 125 and 126; AND gates 131, 132, 133, 134, 135 and 136; and OR gates 141, 142 and 143. A phase inverting circuit 106a includes an inverter 127. A driver 104a includes buffers 151, 152, 153, 154, 155 and 156 to output drive voltages. A vibrating unit 107a is attached to the stator 2 and includes a plurality of vibrators 108a.

The embodiment of Figure 17 shows by way of example a circuit construction for one-step (30°) per second driving of an ultrasonic step motor having a 2λ vibration mode for twelve division steps per rotation. Although not shown in Figure 17, the circuit may comprise the liquid crystal oscillator circuit 101 and the frequency divider circuit 102 of Figure 1 which may be the same construction as that of a known electronic watch. Moreover, the circuit may comprise the oscillation circuit 105 of Figure 1 and may include, for example, a CR oscillation circuit or a self-excitation oscillation circuit.

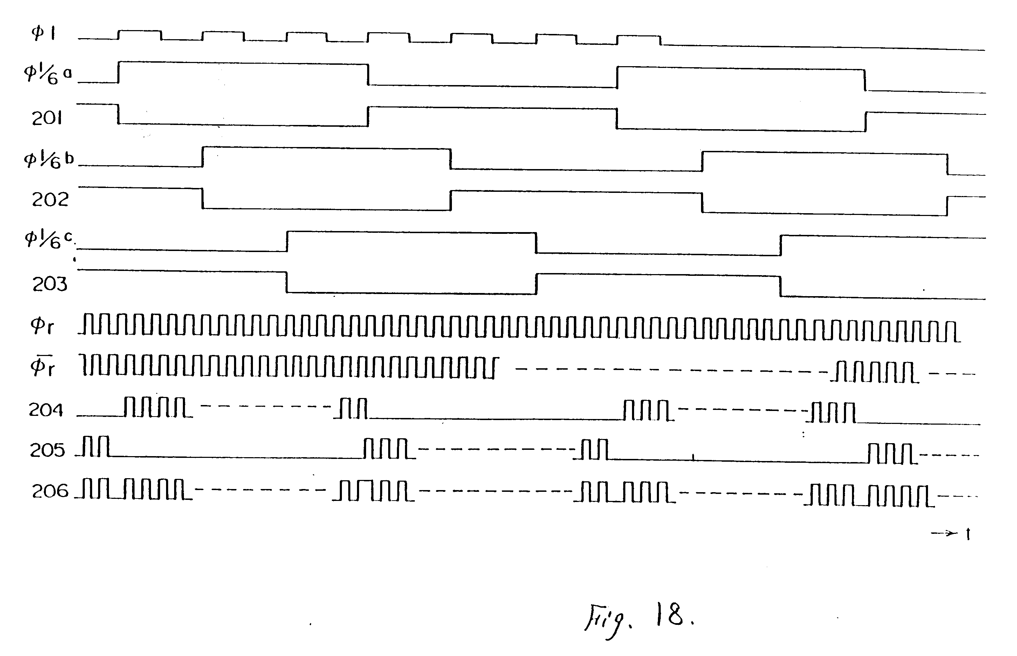

Figure 18 is a timing chart showing the operation of the drive control apparatus of Figure 17. When a control signal ø1 of 1 Hz from the frequency divider circuit 102 of Figure 1 is applied to the frequency divider circuit 109 and to the shift register 110, the 1/6 frequency divider circuit 109 generates a signal subjected to 1/6 frequency division, and this signal is applied to the shift register 110. Thus, the shift register 110 generates signals ø1/6a, ø1/6b and ø1/6c of 1/6 Hz which are shifted in phase by 1 second from one another and which are each shifted in phase every 3 seconds.

Then, the signal ø1/6a is applied to the AND gate 131. The signal ø1/6a is also inverted by the inverter 121, and the resultant signal 201 is applied to the AND gate 132. An output signal ør of the phase inverting circuit 106a is applied to the AND gate 131, and also the AND gate 132 receives an oscillation signal ør from the oscillation circuit 105. As a result, the AND gate 131 generates an output signal 204 representing the logical product of the signal ø1/6a and the output signal ør. The AND gate 132 generates an output on signal 205 representing the logical product of the inverted signal 201 of the signal ø1/6a and the oscillation signal ør. These output signals 204 and 205 are supplied to the buffer 151 through the OR gate 141 whose output is also supplied to the buffer 154 through the inverter 124.

Operation of the motor based on the signals ø1/6b and ø1/6c is basically the same as in the case of the signal ø1/6a. Consequently, after their inverted signals 202 and 203 have been obtained, the signals are processed in the same way as in the case of the signal ø1/6a. The resulting drive control signals which are applied respectively to the buffers 152, 153, 155 and 156 are respectively shifted in phase by one second with respect to the drive control signals to the vibrators A and A̅. Thus, the driver 104 outputs six different kinds of drive voltages so that, in response to the applied drive control signal, each of the buffers applies a drive voltage vibrating at the frequency of the oscillation signal ør to the vibrators 108, thereby momentarily driving two vibrators 108 at a time. As a result, the vibrators 108 are driven, three at a time, in the same phase or in the opposite phase so that flexure vibrations of 2λ are produced and these vibrations drive the rotor 1 in a stepwise manner.

It is to be noted that ideally the drive voltages should be sinusoideal waves so that in order to produce such a waveform, filter circuit means (not shown) for passing the frequency component of the oscillation signal ør is provided after the driver 104, thereby converting the drive voltages to sinusoidal waves.

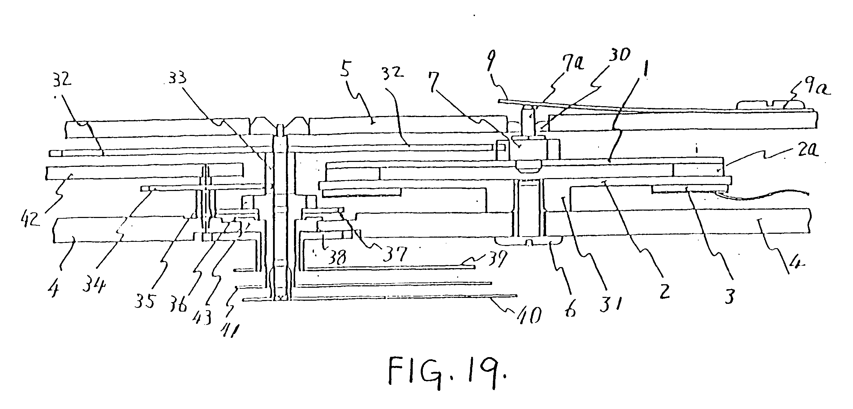

Figure 19 is a sectional view showing a first embodiment of an electronic watch according to the present invention employing an ultrasonic step motor as a transducer. A pinion 7 is mounted on a rotor 1 and its forward-end pivot or shaft 7a is rotatably mounted by and radially supported in a jewel bearing 30 mounted in a wheel train support 5. The pivot 7a is pressed axially by a pressure spring 9, the latter being fixed in place by a fastening screw 9a. A stator 2, having a flange 31, is fixed to a base plate 4 by a fastening screw 6 which passes through the flange 31. Projections 2a formed on the stator 2 are in contact with a rotor 1. The rotation of the rotor 1 which is transmitted to a fourth wheel 32 is decelerated by the pinion 7 which is smaller in diameter than the rotor 1 and which meshes with the fourth wheel 32. The rotation of the fourth wheel 32 is transmitted to the succeeding wheel trains of the hands (seconds, minutes and hour hands). A fourth pinion 33 is secured to the fourth pinion 32. A seconds hand 40 is mounted on the fourth pinion 33. A third wheel 34 and a third pinion 35 are rotatably mounted in a second wheel train support 42 and in the base plate 4. The third pinion 35 drives a minutes hand 41 through a centre wheel 37 and a centre pinion 36. Although not shown, the drive from the centre pinion 36 is decelerated by way of a cannon pinion 38 having an hour hand 39 mounted thereon. While three hands 39, 49, 41 are used in this embodiment, in the case of a timepiece using two hands (namely, the hour hand 39 and the minutes hand 40 only) it is merely necessary to decelerate the drive from the fourth pinion 33 in a single stage, thereby driving the cannon pinion 38.

In the construction shown in Figure 19, the drive from the rotor 1 is decelerated to drive the hands such as the seconds hand and thus only a low positional accuracy of the rotor 1 is required with some allowance for any turning moment applied to the hands due to shock or the like. Also, due to the fact that the rotor 1 is radially supported only at one place, i.e. by the jewel bearing 30, and that its support in the height direction is effected by the stator projections 2a, stable positioning of the rotor 1 can be easily effected. Further, the arrangement of the third wheel 34 below the fourth wheel 32 eliminates the need to increase the planar size of the rotor 1. The wheel trains for driving the hands 39, 40 and 41 can, of course, be provided by various types of wheel trains and the present invention is in no way limited to what is shown in the embodiment of Figure 19.

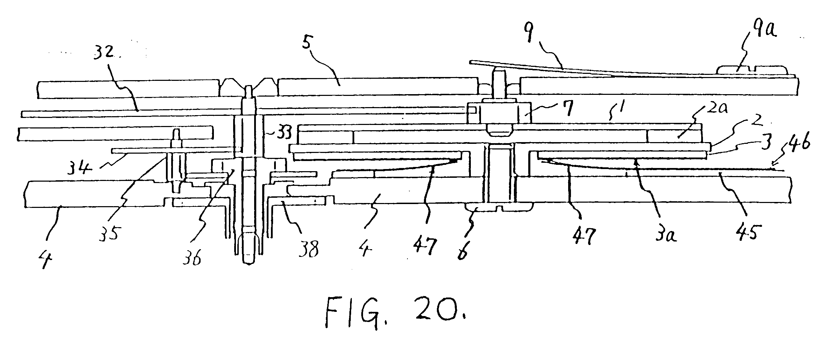

Figure 20 is a sectional view of a second embodiment of an electronic timepiece according to the present invention, showing the electrical connection means thereof. Resiliently pressed against the electrode patterns 3a of the piezo-electric unit 3 are overhang portions 47 of circuit patterns 46 which are attached to a circuit board 45, whereby the AC voltages from a circuit section (not shown) are applied to the electrode patterns 3a. Thus, the stator 2 is caused to vibrate in the flexure mode of vibration, and the rotor 1 is rotated by the circumferential vibration components at the stator projections 2a. The turning force of the rotor 1 drives the fourth wheel 32, which is secured to the seconds hand (not shown), through the pinion 7 of the rotor 1. The rotor 1 also drives the centre pinion 36, which drives the minutes hand (not shown), through the third wheel 34. After the rotary drive from the rotor 1 has been decelerated further, the cannon pinion 38 secured to the hour hand (not shown) is driven.

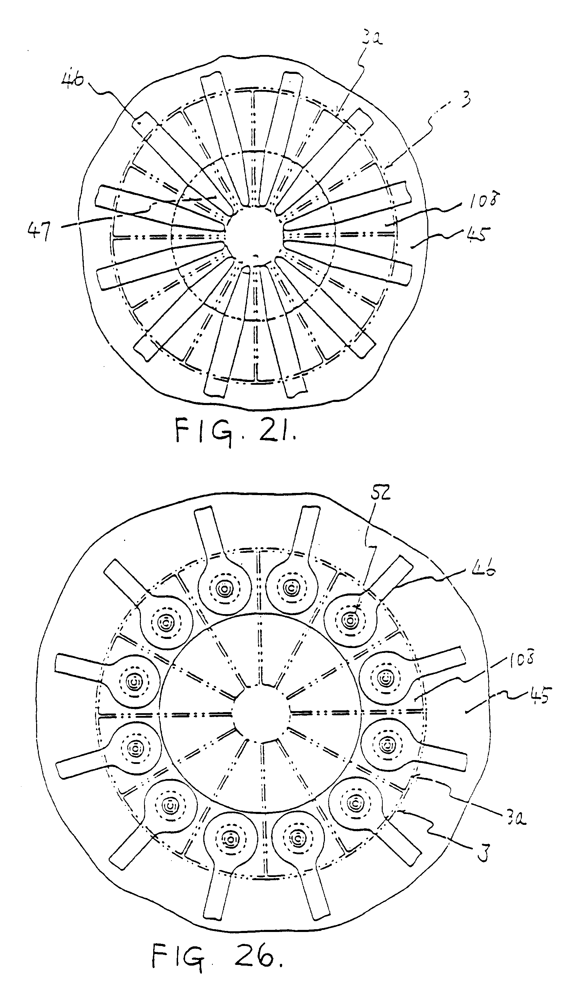

Figure 21 is a plan view showing the relationship beteween the circuit patterns, the overhang portions, and the vibrators of Figure 20. In Figure 21, the dotted lines show the positional relationship between the piezo-electric unit 3 and the electrode patterns 3a. The piezo-electric unit 3 is divided into a plurality of vibrators 108 (twelve vibrators in this embodiment) and each of the vibrators 108 has a separate electrode pattern. Therefore, the circuit patterns 46 arranged on the circuit board 45 are provided in the same number as the electrode patterns. As a result, the vibrators 108 can be driven independently of each other. Of course, the number, layout, form, etc., of the electrode patterns 3a and of the circuit patterns 46 is not limited to the present embodiment.

With the construction described above, if the stator 2 is mounted with the overhang portions 47 turned up and it is fixed in place with the fastening screw 6, the electrical connection between the electrode patterns 3a and the circuit patterns 46 is established by the spring force of the overhang portions 47 and the assembly step is easy. Also, even if there are any variations in the height of the turned-up overhang portions, the overhang portions 47 are deformed easily, thus preventing any detrimental effects such as the occurrence of distortion in the stator 2.

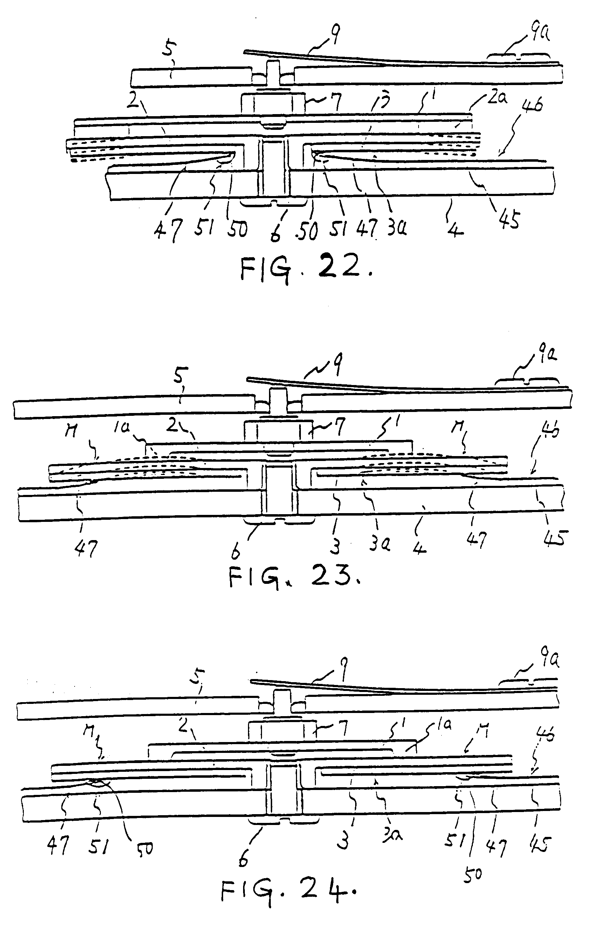

Figure 22 is a sectional view showing part of a third embodiment of an electronic timepiece according to the present invention and showing another example of the electrical connection means of the ultrasonic step motor thereof. A conductive material 51 is attached to each of portions 50 where the overhang portions 47 of the circuit patterns 46 are brought into contact with the electrode patterns 3a, thereby enhancing reliability of the electrical connection. Also, on the external shape side where the vibration amplitude is large, the rotor 1 is in contact with the projections 2a which are adapted to increase the circumferential vibration amplitude. The broken lines show the deformed conditions of the stator 2, and the contact portions 50 are provided at places where the vibration amplitudes are small as will be seen from Figure 22. While this is also the same in the previously mentioned embodiment, in the construction of Figure 22, the contacting of the circuit patterns 46 does not have much effect on the vibrations.

Figure 23 is a sectional view showing part of a fourth embodiment of an electronic timepiece according to the present invention, and showing still another example of the electrical connection means of the ultrasonic step motor thereof. This embodiment differs from the previous embodiment in that the stator 2 is in contact with projections 1a formed on the lower surface of the disk-type rotor 1. The broken lines show examples of the deformed condition during vibrations, and the illustrated case shows the vibration mode with nodal circles M. In this case, the portions of the nodal circles M do not vibrate and therefore the overhang portions 47 of the circuit patterns 46 are in contact with the electrode patterns 3a of the vibrating unit 3. Also, the rotor 1 and the stator 2 are in contact at the portions of the vibration antinodes. In this construction, even if the overhang portions 47 are strongly forced into contact, there is no effect on the vibrations and thus the reliability of the electrical connection is enhanced.

Figure 24 is a sectional view showing part of a fifth embodiment of an electronic timepiece according to the present invention, and showing still another example of the electrical connection means of the ultrasonic step motor thereof. This embodiment differs from the previous embodiment in that the reliability of the electrical connection is further improved by attaching a conductive agent 51 e.g. conductive adhesive or solder, to each of the contact portions 50 for the overhang portions 47 and the electrodes 3a. Even in this embodiment, due to the attachment of the conductive agent 51 to the portions of the vibration nodal circles M of the stator 2, the mass of the conductive agent 51 has no effect on the vibrations.

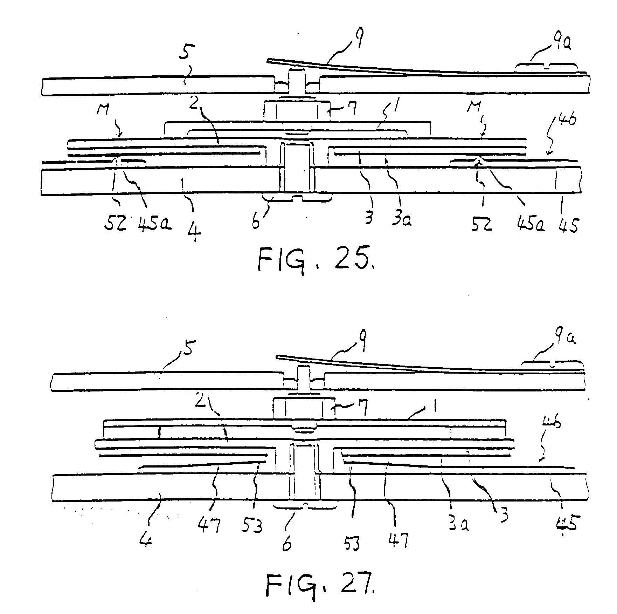

Figure 25 is a sectional view showing part of a sixth embodiment of an electronic timepiece according to the present invention, and showing still another embodiment of the electrical connection means of the ultrasonic step motor thereof. This embodiment utilizes the same vibration mode as that of Figures 23 and 24. The rotor 1 and the stator 2 are brought into contact at the portions of the vibration antinodes so that each of the electrode patterns 3a of the piezo-electric unit 3 is in contact with one of projections 52 provided at the circuit patterns 46 of the circuit board 45. Each projection 52 is formed at one of holes 45a provided in the circuit board 45. With this construction, by fastening the stator 2 in place with the fastening screw 6, the projections 52 are sandwiched by the base plate 4 and the electrode patterns 3a, thereby ensuring a good connection. In this case, any variations in the height of the projections 52 are tolerated by the plastic deformation and elastic deformation of the projections 52.

Figure 26 is a plan view showing the relationship between the circuit patterns,the projections and the vibrators of Figure 25. The positions of the circuit patterns 46 and the projections 52 which are formed on the circuit board 45 correspond to the electrode patterns 3a of the piezo-electric unit 3 which are indicated by the broken lines. While the number of the vibrators 108 in this case is twelve as shown in Figure 21, the present invention is not limited to this embodiment.

Figure 27 is a sectional view showing a part of a seventh embodiment of an electronic timepiece according to the present invention, and showing still another example of the electrical connection means of the ultrasonic step motor thereof. This embodiment employs the same vibration mode as that of Figure 22. Since the vibration amplitude of the stator 2 is low in the central portion, current is supplied through bumps or projections 53 and the overhang portions 47 of the circuit patterns 46 formed on the circuit board 45 on the inner diameter side of the electrode patterns 3a of the piezo-electric unit 3. In this case, the bumps 53 are made of solder, gold, conductive adhesive or the like, and the electrode patterns 3a and the overhang portions 47 are fastened together to effect the electrical connection. As a result, a holding force is possessed by the bumps 53, and variations in the height direction are accomodated by the elastic deformation and plastic deformation of the overhang portions 47. This construction has a high degree of freedom for position setting in height direction and good electrical connection is positively ensured.

It is to be noted that in order to ensure good electrical connection in the ultrasonic step motor, the only requirement is that the electrode patterns 3a and the circuit patterns 47 are elastically brought into contact so as to provide the required electrical connection, and the invention is not limited to the above-mentioned embodiments. Also, the modes of vibration are not limited to those of the previously mentioned embodiments.

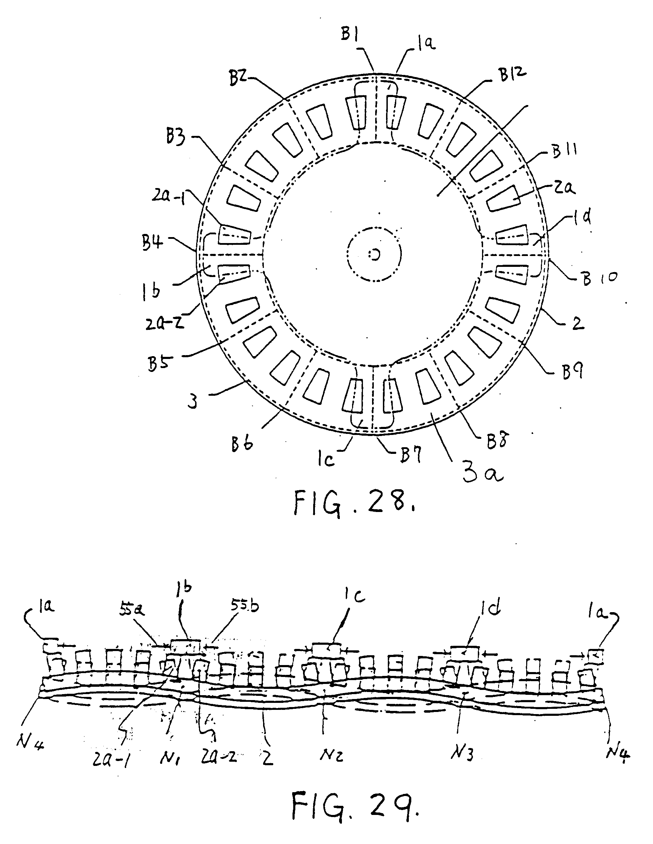

Figure 28 is a top plan view of the stator 2 of an ultrasonic step motor which may be used in an electronic timepiece according to the present invention. The two-dot chain line indicates the rotor 1 and the broken lines indicate the boundaries B₁ to B₁₂ of the twelve electrode patterns. The stator projections 2a increase the circumferential vibration displacements of the stator 2 and they also contact the rotor projections 1a to 1d. The boundary of each electrode pattern 3a is positioned centrally between adjacent stator projections 2a. With this construction, the twelve division patterns are formed into four groups each of which comprises three adjoining patterns 3a, so that opposing groups are driven in the same phase and adjacent groups are driven in opposite phase, thereby causing a thickness-direction vibration of 2 λ (the number of nodes is 4). For instance, if the patterns are divided at the boundaries B₁, B₄, B₇ and B₁₀, respectively, vibrations having nodes at the boundaries B₁, B₄, B₇ and B₁₀, respectively, are produced.

Figure 29 is a diagram showing the operation of the ultrasonic step motor of Figure 28. Figure 29 shows a disk-type stator 2 which is developed linearly. The projections 1a to 1d of the rotor 1 at four places are brought into contact with the projections 2a of the stator 2, and vibration nodes N₁, N₂, N₃ and N₄ are formed at four places. In other words, Figure 29 is a section at the projections 1a and the nodes N₄ and is then developed. The broken lines show the cases which are opposite in vibration phase to the solid lines. With this construction, when the rotor 1 is moved and stopped, there is a force of inertia so that as, for example, the projections 1b is altenatively subjected to driving forces 55a and 55b from the projections 2a-1 and 2a-2 and the forces are balanced, the projection lb is thereby stopped. As a result, the projections 1a to 1d at the four places are respectively stopped at the positions of the nodes N₁, N₂, N₃ and N₄ . Also, if any deviation is caused between the position of the projection and the position of the node, the projection is subjected only to the driving force in one direction and the projection is moved until the positions of the two are in alignment.

Figure 28 shows the condition where the nodes are formed at the boundaries B₁, B₄, B₇ and B₁₀ and the projections 1a to 1d are respectively moved thereto. Then, if the combinations of the patterns to be driven are shifted by one and are driven, the rotor 1 is driven stepwise by an amount corresponding to the shifting of the nodes. On the contrary, if the combinations of the patterns to be driven are shifted in the reverse direction, that is the nodes are shifted to B₃, B₁₂, B₉ and B₆, the rotor 1 is rotated in the reverse direction.

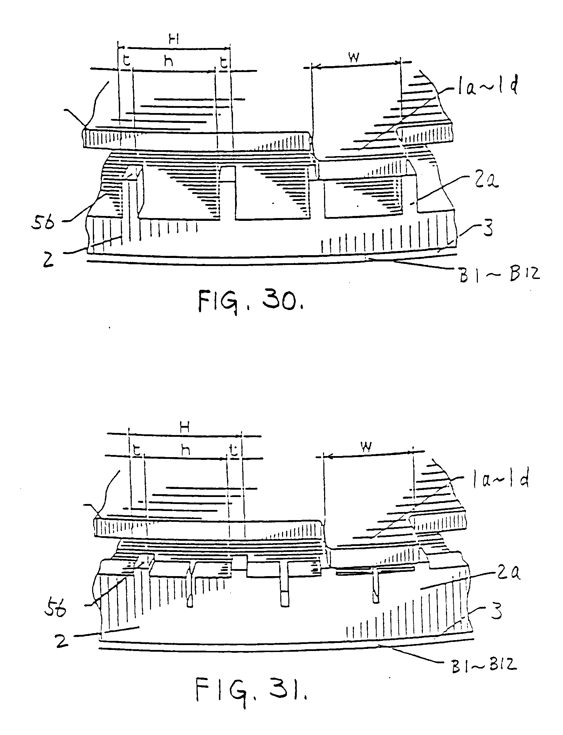

Figure 30 is a perspective view showing in detail the projections 2a of the stator 2. The stator projections 2a are arranged so as to interpose the electrode pattern boundaries B₁ etc. therebetween. The width W of each of the projections 1a to 1d of the rotor 1 is selected to be wider than the gap h between the adjacent projections 2a of the stator 2 but smaller than the width H between the outer faces of the adjacent projections 2a of the stator 2.

When vibrations are caused in the stator 2, the driving force is applied to the projections 1a to 1d of the rotor 1 which are in contact with the contact surfaces 56 of the stator projections 2a. Consequently, each of the projections 1a to 1d is stopped at a balance point of the displacements of the projections 2a which are positioned on opposite sides of each vibration node. As shown in Figure 29 too, each of the rotor projections 1a to 1b is subjected to the driving forces 55a and 55b so that it is always stopped by contact with the adjacent two stator projections 2a, and there is no possibility of it being stopped by the application of the force from only one side.

Thus, referring again to Figure 30 so as to explain the possible stopping range for each of the rotor projections 1a to 1d, each of the rotor projections 1a to 1d is always stopped by contact with the adjacent two stator projections 2a which are on opposite sides of each vibration node. In other words, it is stopped in such a way that the rotor projection is aligned with at least one of the stator projections 2a. That is, each of the rotor projections 1a to 1d is stopped in such a way that one end thereof is not disposed within the non contact width h. In this case, if the width W of each rotor projection is selected so as to be equal to (h+t), each end of the rotor projection is stopped within the width t of the stator projection with which it is in contact and its positional accuracy becomes t/2. Thus, the smaller is the width t of the stator projection, the greater will be the positional accuracy of the stopping point.

While the above-described embodiment shows the state of affairs in the case of a rotary-type ultrasonic step motor, it is possible to produce a similar effect even in the case of a linear-type ultrasonic step motor and the invention is in no way limited to the embodiments of Figure 30 with respect to the number of nodes, the number of projections, etc., provided that the positions of the stator nodes correspond to the positions of the rotor projections.

Figure 31 is a perspective view showing another example of the construction of the stator projections. As shown in Figure 31, the convex width of the whole of each stator projection 2a need not be uniform and it is only necessary that the width t of the portion which contacts one of the rotor projections 1a to 1d has the same magnitude as that of the previously mentioned projection. Also, the shape of each projection 2a may take any form within the previously mentioned limitations.

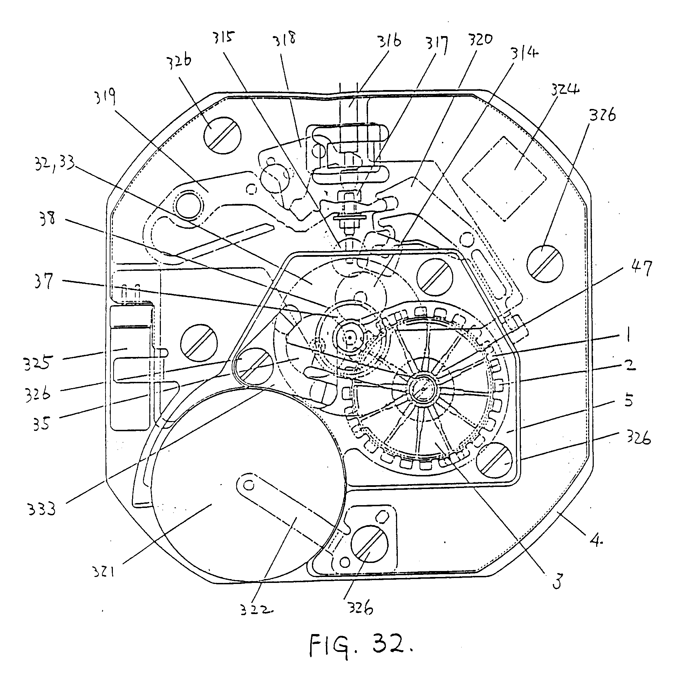

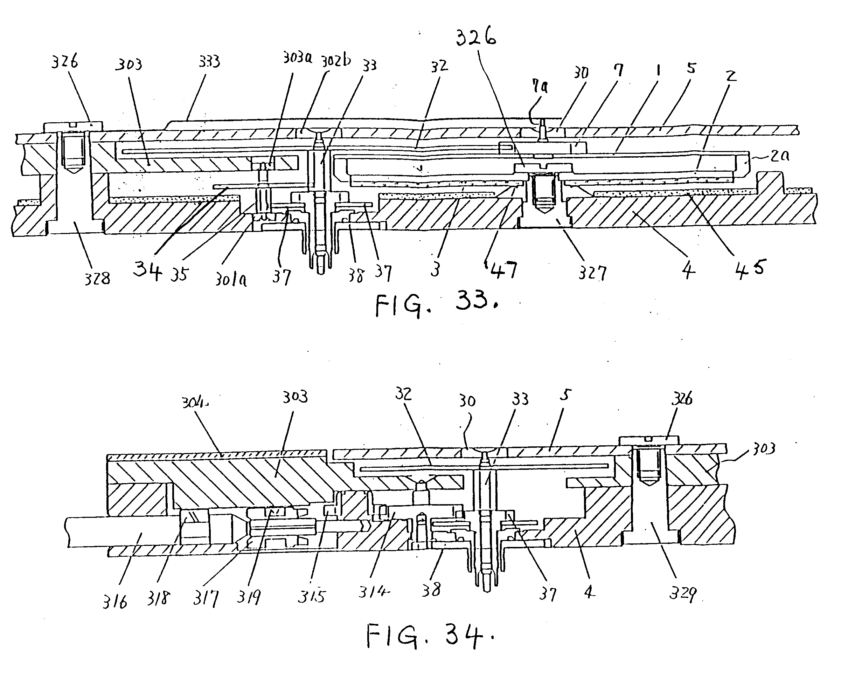

Figure 32 is a plan view showing an eighth embodiment of an electronic watch according to the present invention incorporating the previously mentioned ultrasonic step motor, Figures 33 to 36 are sectional views showing the principal parts of the electronic watch of Figure 32.

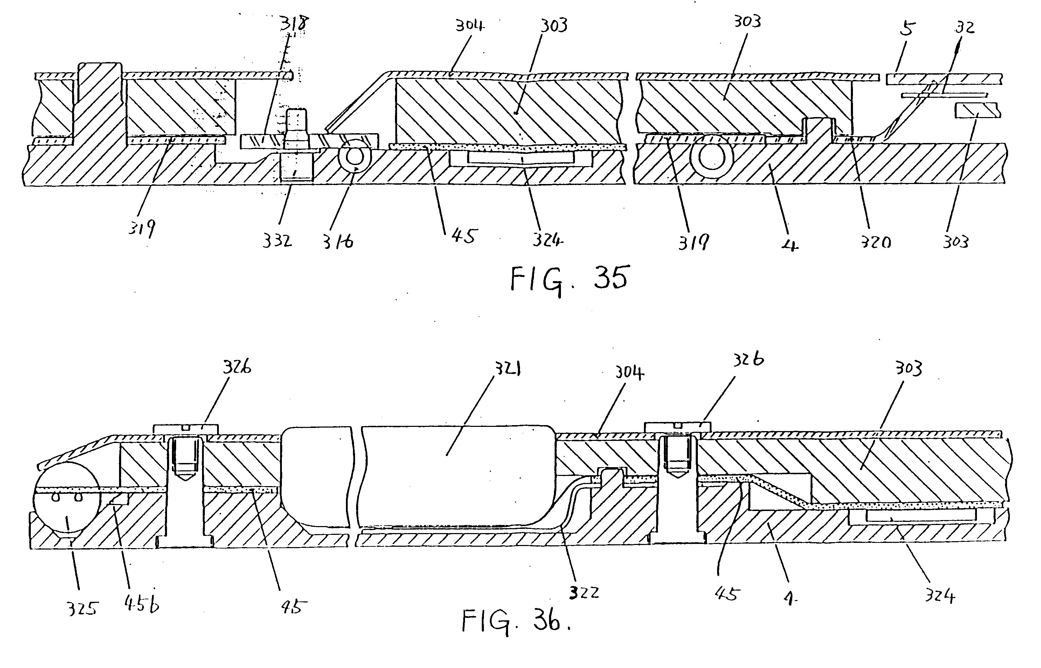

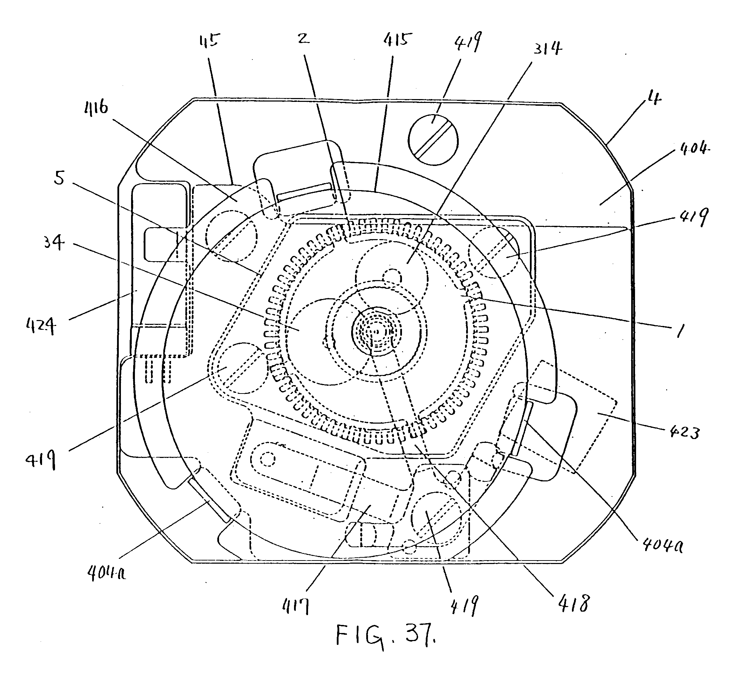

A base plate 4 constitutes a base frame of a watch proper. As shown in Figures 35 and 36, mounted on the upper part of the base plate 4 is a circuit board 45 which is made of a flexible material. Mounted on the circuit board 45 is an IC 324 for generating electrical signals, and a liquid crystal plate oscillator 325 serving as a time reference generating source.

A button-type battery 321 serving as a power source is fixed in place by a spring portion of a circuit pressure plate 304 which is arranged on the top portion to press the side of the battery 321 as shown in Figure 36. A negative terminal 322 is made of a resilient material and it is mounted in position by a dowel formed in the base plate 4, thus pressing against the negative plate housing of the battery 321 and thereby establishing a negative connection between the terminal 322 and the battery 321. Also, the negative terminal 322 is in contact with the negative patterns of the circuit board 45, the latter being arranged above the negative terminal 322. The connection between the negfative terminal 322 and the circuit board 45 is established by fastening together, by means of screws 326, a second wheel train support 303 and the circuit pressure plate 304 which are arranged above the circuit board 45.

In order to ensure a positive connection, the side of the positive plate can of the battery 321 is pressed by a battery holding spring formed on the circuit pressure plate 304, thereby fixing the battery in place and establishing a positive connection. The battery 321 is arranged at a position where it is not placed in the same plane as that of the stator 2 forming a part of the stepping motor proper. By so doing, a reduction in size is realized with respect to the thickness of the movement.

As shown in Figure 36, the liquid crystal plate oscillator 325 is arranged in a V-shaped inclined plane portion formed in the base plate 4 and contacts a positive pattern 45b formed to overhang from the circuit board 45. The oscillator 325 is fixed in place by the application of pressure through a spring portion which extends from the circuit pressure plate 304. A positive connection from the oscillator 325 to the circuits of the circuit board 45 is established by the positive pattern 45b beneath it.

As shown in Figure 33, the ultrasonic step motor serving as a transducer includes a rotor 1, a stator 2, a piezo-electric unit 3 and a pinion 7 and it will be decribed only briefly since its basic construction is the same as that of the previously mentioned embodiments.

The piezo-electric unit 3 serving a vibrating unit is adhesively fastened to the stator 2 and vibrations are caused in the piezo-electric unit 3 by the application of voltages.

The stator 2 is secured in position by a screw pin 327 drive fitted in the base plate 4 and also a flange portion is fixed in place with screws 326. Formed on the outer periphery of the stator 2 are a plurality of projections 2a for vibration amplifying purposes, and the rotor 1 is placed on the projections 2a. The pinion 7 is mounted on the rotor 1 and a pinion pivot 7a formed on the pinion 7 is positioned by a jewel bearing 30 which is drive-fitted in the wheel train support 5. The rotor 1 is formed with four planar projections on its outer periphery and these portions of the rotor 1 are rotated by the vibration of the projections formed on the stator 2.

The driving method and operation of the ultrasonic step motor have been described above and will not be described further.

With the rotor 1 adapted for stepping driving, the pivot 7a formed on the pinion 7 extends through the wheel train support 5 and it is pressed from above by a rotor pressure spring 333 fastened by a screw 326, thereby producing the required frictional force between the stator 2 and the rotor 1 to ensure rotation of the rotor 1.

An opening which is concentric with but greater in diameter than the screw pin 327 is formed in the circuit board 45 which is positioned on one side of the piezo-electric unit 3, the circuit board 45 being mounted on the base plate 4. A pattern 47 which is made of a resilient material and which extends over the hole makes spring contact with each of the twelve vibrators of the piezo-electric unit 3, thereby establishing a circuit connection. The circuit connection to the piezo-electric unit 3 serving as a vibrating unit is provided in the central portion, and this does not contribute much to the vibrations, so as to reduce as much as possible the effect on the vibration conditions. Thus, as in this embodiment, the circuit board 45 is arranged on one side of the piezo-electric unit 3 so that there is no need for a complicated construction provided for example by soldering lead wires, etc., and it is possible to provide a simple construction based on the spring contacts as in the present embodiment. Further, due to the simplified construction, it is possible to reduce the number of component parts and also to decrease the thickness of the watch movement.

The step-driven rotor 1 is in mesh with a fourth wheel 32 with a reduction ratio of 1/5. The fourth wheel 32 is positioned so as to lie in a different plane from the rotor 1 and is arranged in section above the rotor 1 with a given gap therebetween. To arrange the fourth wheel 32 and the rotor 1 one upon another as in this embodiment means that the rotation is transmitted by a single speed reduction. On the contrary, if the rotation is transmitted to the fourth wheel by a plurality of speed reductions, the number of wheel trains will be increased and the planar size of the watch movement will be increased. On the other hand, it may be said that to arrange the ultrasonic motor in the central position of the watch proper so as to directly drive the watch appears to increase the thickness of the movement. Consequently, the disposition of the parts shown in the present embodiment is the optimum structure in terms of the movement size. In addition, the ultrasonic motor is capable of producing a high torque, and a higher torque can be produced by effecting speed reduction.

As shown in Figures 33 and 34, a fourth pinion 33 is fixed to the fourth wheel 32 so as to be integral therewith, and the pinion 33 indicates the seconds in response to the step movement every second. A third wheel 34 which is rotatably mounted in a jewel bearing 301a drive-fitted in the base plate 4, and a jewel bearing 303a drive-fitted in a second wheel train support 303, is engaged with the fourth pinion 33 thereby transmitting the rotation to a centre wheel 37 engaged with a third pinion 35. The third wheel 34 is arranged in a position where it is in the same plane as the stator 2. If the third wheel 34 is arranged below the stator 2, in contrast to the present embodiment, the thickness is increased by an amount corresponding to that of the third wheel 34 and the second wheel train support 303, and consequently the thickness of the movement is increased.

The rotation of the third pinion 35 is transmitted to an hour indicating cannon pinion 38 through the minutes indicating centre gear 37 and a minutes wheel 314. The minutes wheel 314 is positioned so as to be in substantially the same plane as the stator 2, thereby making it possible to reduce the movement thickness.

A stem 316 (Figure 32), which is an externally operable member, is supported in the horizontal opening formed in the base plate 4. A joint 318 (Figure 34), which is engaged and operatively associated with the stem 316, is rotatable about the centre of rotation of a joint shaft 332 drive-fitted in the base plate 4. The joint 318 is engaged with a latch 319 which is rotatable about the centre of rotation of a dowel of the base plate 4 by virtue of the reaction force of a spring portion of the latch 319, thereby positioning both the joint 318 and the latch 319.

The latch 319 is engaged with grooves of a clutch member 317 which is mounted on an angular portion formed on the stem 316, thereby positioning the clutch member 317. A control lever 320 is rotatable about the base plate dowel as its centre of rotation and it is engaged with the forward end of the portion of the latch 319 which is engaged with the clutch member 317. When correcting the time, the stem 318 is withdrawn and operated so that in association with the rotary movement of the joint 318, the latch 319 comes into operation, thus producing a "click". The clutch member 317 is also operated towards the centre of the watch proper so as to engage with a pinion 315. The control level 320 engaging with the latch 319 is caused to make a rotary movement so that the fourth wheel 32 is adjusted, thereby making possible the correction of the time. At the same time, the spring formed on a part of the control lever 320 comes into contact with the circuit board patterns, thereby resetting the circuits. In this connection, the stem 316 is rotated so that the clutch member 317 is rotated and the correction of the rotation of the centre wheel 37 is made possible through the pinion 315 and the minute wheel 314. These time correcting members are subjected to setting by the second wheel train support 303. While the time correcting means of this embodiment is constructed mechanically, it is possible to use time correcting means employing electronic correction.

Since the drive transmitted by the ultrasonic step motor is decelerated by the use of the above-mentioned construction to indicate the seconds, the accuracy of the rotational positioning of the seconds hand is also improved and a higher torque is further obtained, thereby ensuring a satisfactory safety factor against shock due to the dropping or the like of the watch. Due to the single speed reduction construction, the movement thickness and the planar size of the watch proper are reduced. Similarly, a further reduction in the movement thickness is made possible by the fact that the transmission wheel train and the battery are arranged so as to be offset with the stator of the ultrasonic motor proper. In addition, due to the arrangement of the circuit board on one side of the piezo-electric element, there is a simplification of the electrical connections of the circuit board, so decreasing the number of component parts decreasing the number of component processing operations, and enhancing the reliability.

While the embodiment of Figures 32-36 has been described as applied to a three-hands watch, by arranging that the fourth wheel 32 is used as a minute gear and the rotation is transmitted to the cannon pinion 38 from the minute gear through the minute wheel, it is possible to obtain the same effects even with a two-hands watch.

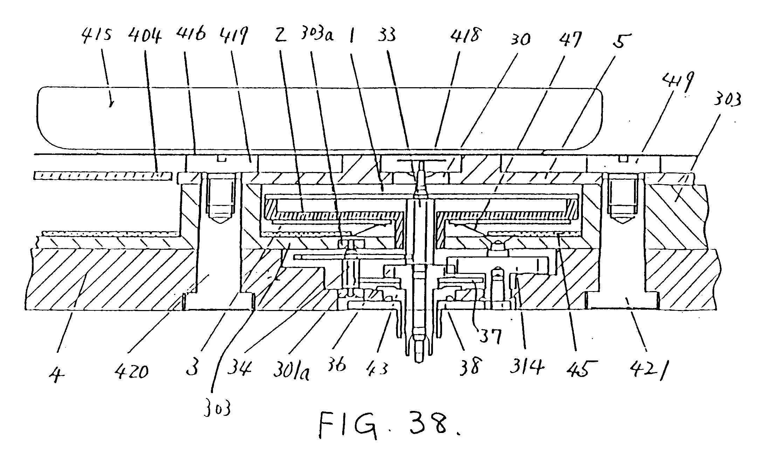

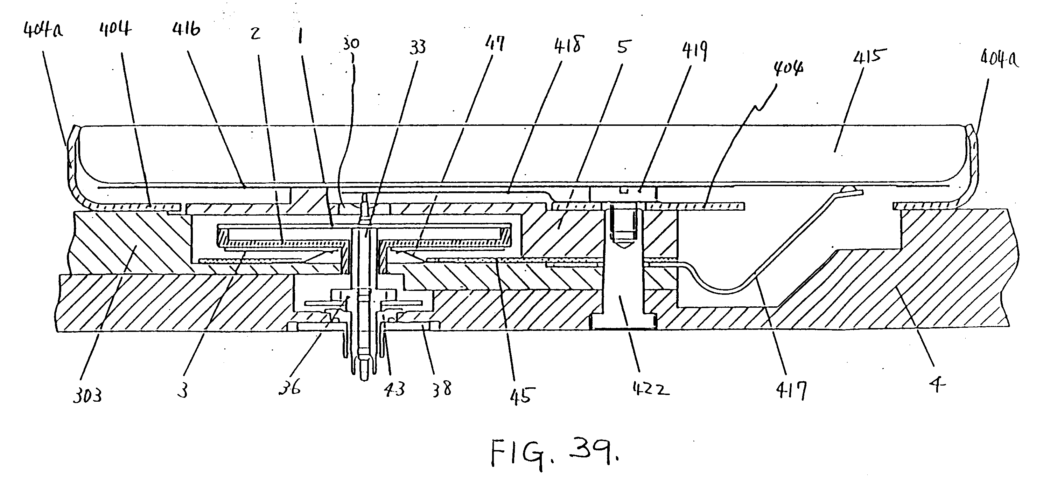

Figure 37 is a plan view showing a ninth embodiment of an electronic watch incorporating an ultrasonic step motor. Figures 38 and 39 are sectional views showing the principal parts of the electronic watch of Figure 37.

A centre tubular member is drive-fitted in a base plate 4 at the central position of the watch proper, and a minute indicating centre wheel 37 is mounted in the upper part of the centre tubular member. A third wheel 34, which is a transmission wheel for the centre wheel 37 from a fourth pinion 33 serving as a seconds indicating wheel, is rotatably supported in a jewel bearing 303a drive-fitted in a second wheel train support 303 serving as a wheel train support member. A cannon pinion 308 serving as an hour indicating wheel is caused to rotate by the centre wheel 37 through a minute wheel 314. In the like manner to the third wheel 34, the minute wheel 314 is rotatably supported in the bores formed in the base plate 4 and in the second wheel train support 303.

A stator 2, forming a part of the ultrasonic step motor used in this embodiment, is drive-fitted in the second wheel train support 303 at the watch proper central position. A piezo-electric unit 3 serving as a vibrating unit is adhes to the stator 2, and vibrations are caused in the stator 2 by the application of fixed voltages. A plurality of projections 2a for vibration amplifying purposes are formed on the outer periphery of the stator 2, and a rotor 1 is mounted on the projections 2a. A planar projection is formed at each of four places on the outer periphery of the rotor 1 and these portions are rotated by the vibration of the projections 2a formed on the stator 2.

The rotor 1 is fixed to the fourth pinion 33 to be integral therewith so that the rotation of the rotor 1 rotates the fourth pinion 33, whereby to indicate the seconds. The pivot formed on the fourth pinion 33 is rotatably mounted in a jewel bearing 30 which is drive-fitted in a wheel train support 5 and its planar position is fixed. The pivot extends through the jewel bearing 30 and its top is pressed by a fourth pinion pressure spring 418 which is fastened with a screw 419, thereby providing a frictional force between the rotor 1 and the stator 2 which affects the turning force of the rotor 1.

The wheel train support 5 and the second wheel train support 303 are both mounted on screw pins 420 and 421 and are fixed in place by screws 419.

While the embodiment of Figures 37-39 concerns the case in which the ultrasonic motor is operated as a stepping motor, it is possible to operate the ultrasonic motor as a continuous drive motor driven by a travelling wave or the like.

A circuit board 45 is made of a flexible material. Mounted on the circuit board 45 are an IC 423 for generating electrical signals and a liquid crystal oscillator 424 serving as a time reference generating source. The circuit board 45 is positioned on one side of the piezo-electric unit 3 of the ultrasonic motor and it is mounted on the second wheel train support 303. The ultrasonic motor is formed with an opening which is concentric with the flange of the stator and which is the same in diameter as the stator, and patterns 47 which are made of a resilient member and which extend over the opening are brought into contact with the vibrators of the piezo-electric unit 3, thereby providing a circuit connection.

A battery 415 serving as a power source is mounted through an insulating sheet 416 on the screws 419 which are arranged at several places of the movement. A circuit pressure plate 404 is a supporting member for the circuit section and it includes vertically folded portions 404a which are arranged at places on the outer periphery of the battery 415 and have substantially the same height as the battery, whereby the folded portions 404a apply a radial pressure force to the battery 415, thereby fixing it in place. They also establish a positive connection from the side of the battery positive electrode can. The negative connection is provided by establishing a spring contact between the lower surface negative electrode can and a negative terminal 417 mounted on a dowel (not shown) formed in the second wheel train support 303 in the vicinity of a screw pin 422. The electrical connection between the negative terminal 417 and the circuits is provided by fastening the negative pattern of the circuit board 45 to the upper part of the negative terminal 417 by fastening a screw 419 to the screw pin 422 through the wheel train support 5 and the circuit pressure plate 404.

With the construction described above, a reduction in the size of the movement is realized by virtue of the fact that the battery or the power source of the watch using the ultrasonic step motor as a transducer is mounted above the movement, and that the stepping motor proper and the wheel train section are arranged in such positions that they are placed one upon the other.

While the embodiment of Figures 37-39 has been described as applied to a three-hands watch, it is possible to obtain the same effects even in the case of a two-hands watch.

## Claims

1. An electronic timepiece having an ultrasonic motor (1,2,103,107,108) comprising a stator (2) provided with vibrator means (107) for exciting the stator (2); a rotor (1) arranged to drive time indicating means (39-41) of the timepiece, the rotor (1) and/or the stator (2) having at least one portion (1a-1d,2a) which in operation engages the other member so that the rotor (1) is driven by the stator (2); and drive control means (103) arranged to impress waves on said vibrator means (107) so as to drive the rotor (1) characterised in that the vibrator means (107) comprise a plurality of vibrators (108), the drive control means (103) being arranged to apply a standing wave to each of the vibrators (108) and to effect phase shifting of said wave so as to drive the rotor (1) in a stepwise manner.

2. An electronic timepiece as claimed in claim 1 characterised in that resilient means (9) are provided to urge the rotor (1) and stator (2) into contact with each other.

3. An electronic timepiece as claimed in claim 2 characterised in that the motor comprises a circuit board (45) having a pluralityof circuit patterns (46), the said resilient means (9) urging the circuit patterns (46) and electrodes (3a) of the vibrators (3) into electrical contact with each other.

4. An electronic timepiece as claimed in claim 3 characterised in that the circuit board (45) is disposed on the same side of the stator (2) as the vibrators (3).

5. An electronic timepiece as claimed in any preceding claim in that the stator (2) has a plurality of equally spaced apart projections (2a), the stator projections (2a) having contact surfaces (56) which in operation engage the rotor (1), the width (t) of each contact surface (56) in the direction of rotation of the rotor (1) being less than the spacing (h) between adjacent stator projections (2a).

6. An electronic timepiece as claimed in any preceding claim characterised in that the rotor (1) drives a seconds indicating gear means (32,33) comprising a fourth wheel (32) which is in a different plane from that of either the rotor (1) or the stator (2).

7. An electronic timepiece as claimed in any preceding claim characterised in that the rotor (1) drives a minutes indicating gear means (36,37) comprising a centre wheel (37) which is disposed at the centre of the timepiece and which is disposed in a different plane from that of the stator (2).

8. An electronic timepiece as claimed in claim 7 characterised in that the centre wheel (37) drives an hour indicating gear means (38) by way of a minute wheel (314) which is in the same plane as but is spaced from the stator (2).

9. An electronic timepiece as claimed in any preceding claim characterised in that the ultrasonic motor (1,2,103,107,108) is powered by a battery (321) which is so disposed that the battery (321) and the stator (2) are not placed one above the other.

10. An electronic timepiece as claimed in any of claims 1-8 characterised in that the ultrasonic motor (1,2,103,107,108) and the time indicating means (39-41) are arranged substantially centrally of the timepiece, the motor being powered by a battery (415) at least a part of which is disposed above the motor (1,2,103,107,108).

11. An electronic timepiece having an ultrasonic motor comprising a stator (2) provided with vibrator means (107) for exciting the stator (2); a movable member (1) arranged to drive time indicating means (39-41) of the timepiece, the movable member (1) and/or the stator (2) having at least one portion (1a-1d,2a) which in operation engages the other member so that the movable member (1) is driven by the stator (2); and drive control means (103) arranged to impress waves on said vibrator means (107) so as to drive the movable member (1) characterised in that the or each said portion (1a-1d,2a) is constituted by a projection of the movable member (1) or stator (2).

## Patentansprüche

1. Elektronische Uhr mit einem Ultraschallmotor (1, 2, 103, 107, 108) umfassend einen Stator (2), der mit Schwingungserregermitteln (107) zum Anregen des Stators (2) versehen ist; einen zum Antreiben von Zeitanzeigemitteln (39-41) der Uhr eingerichteten Rotor (1), wobei der Rotor (1) und/oder der Stator (2) wenigstens einen Abschnitt (1a-1d, 2a) aufweisen, der im Betrieb an dem anderen Element angreift, so daß der Rotor (1) durch den Stator (2) angetrieben wird; und Treiber-Ansteuermittel (103), die dafür eingerichtet sind, den Schwingungserregermitteln (107) Wellen derart aufzuprägen, daß der Rotor (1) angetrieben wird,
**dadurch gekennzeichnet,**
daß die Schwingungserregermittel (107) eine Mehrzahl von Schwingungserregern (108) umfassen, wobei die Treiber-Ansteuermittel (103) dafür eingerichtet sind, an jedem Schwingungserreger (108) eine stehende Welle anzulegen und die Phase der Welle derart zu verschieben, daß der Rotor (1) in einer schrittweisen Art angetrieben wird.

2. Elektronische Uhr nach Anspruch 1,
**dadurch gekennzeichnet,**
daß Federmittel (9) bereitgestellt sind, um den Rotor (1) und den Stator (2) in Kontakt miteinander zu drücken.

3. Elektronische Uhr nach Anspruch 2,
**dadurch gekennzeichnet,**
daß der Motor eine gedruckte Schaltung (45) mit einer Mehrzahl von Schaltungsstrukturen (46) umfaßt, wobei die Federmittel (9) die Schaltungsstrukturen (46) und Elektroden (3a) der Schwingungserreger (3) in elektrischen Kontakt miteinander drücken.

4. Elektronische Uhr nach Anspruch 3,
**dadurch gekennzeichnet,**
daß die gedruckte Schaltung (45) auf der gleichen Seite des Stators (2) wie die Schwingungserreger (3) angeordnet ist.

5. Elektronische Uhr nach einem der vorhergehenden
Ansprüche, **dadurch gekennzeichnet,**
daß der Stator (2) eine Mehrzahl von im gleichen Abstand angeordneten Vorsprüngen (2a) aufweist, wobei die Statorvorsprünge (2a) Kontaktoberflächen (56) aufweisen, die im Betrieb an dem Rotor (1) angreifen, wobei die Breite (t) jeder Kontaktoberfläche (56) in der Richtung der Drehung des Rotors (1) kleiner ist als der Zwischenraum (h) zwischen benachbarten Statorvorsprüngen (2a).

6. Elektronische Uhr nach einem der vorhergehenden
Ansprüche, **dadurch gekennzeichet,**
daß der Rotor (1) ein Sekundenanzeigegetriebemittel (32, 33) antreibt, das ein viertes Rad (32) umfaßt, welches in einer anderen Ebene angeordnet ist als entweder der Rotor (1) oder der Stator (2).

7. Elektronische Uhr nach einem der vorhergehenden
Ansprüche, **dadurch gekennzeichnet,**
daß der Rotor (1) ein Minutenanzeigegetriebemittel (36, 37) antreibt, das ein Mittelrad (37) umfaßt, welches in der Mitte der Uhr und in einer anderen Ebene als der Stator (2) angeordnet ist.

8. Elektronische Uhr nach Anspruch 7,
**dadurch gekennzeichnet,**
daß das Mittelrad (37) ein Stundenanzeigegetriebemittel (38) über ein Minutenrad (314) antreibt, welches in der gleichen Ebene wie der Stator (2), aber im Abstand zu diesem angeordnet ist.

9. Elektronische Uhr nach einem der verhergehenden
Ansprüche, **dadurch gekennzeichnet,**
daß der Ultraschallmotor (1, 2, 103, 107, 108) durch eine Batterie (321) angetrieben wird, die derart angeordnet ist, daß die Batterie (321) und der Stator (2) nicht übereinander angeordnet sind.

10. Elektronische Uhr nach einem der Ansprüche 1-8,
**dadurch gekennzeichnet,**
daß der Ultraschallmotor (1, 2, 103, 107, 108) und die Zeitanzeigemittel (39-41) im wesentlichen in der Mitte der Uhr angeordnet sind, wobei der Motor durch eine Batterie (415) angetrieben wird, die zumindest zum Teil über dem Motor (1, 2, 103, 107, 108) angeordnet ist.

11. Elektronische Uhr mit einem Ultraschallmotor umfassend einen Stator (2), der mit Schwingungserregermitteln (107) zum Anregen des Stators (2) versehen ist; ein bewegbares Element (1), daß dafür eingerichtet ist, Zeitanzeigemittel (39-41) der Uhr anzutreiben, wobei das bewegbare Element (1) und/oder der Stator (2) wenigstens einen Abschnitt (1a-1d, 2a) aufweisen, der im Betrieb an dem anderen Element angreift, so daß das bewegbare Element (1) durch den Stator (2) angetrieben wird; und Treiber-Ansteuermittel (103), die dafür eingerichtet sind, den Schwingungserregermitteln (107) Schwingungen bzw. Wellen derart aufzuprägen, daß das bewegbare Element (1) angetrieben wird,
**dadurch gekennzeichnet,**
daß der oder jeder Abschnitt (1a-1d,2a) durch einen Vorsprung des bewegbaren Elements (1) oder des Stators (2) gebildet ist.

## Revendications

1. Article d'horlogerie ayant un moteur à ultrasons (1, 2, 103, 107, 108) comprenant un stator (2) pourvu de moyens vibreurs (107) pour exciter le stator (2); un rotor (1) agencé pour entraîner des moyens donnant le temps (39 - 41) de l'article d'horlogerie, le rotor (1) et/ou le stator (2) ayant au moins une portion (1a - 1d, 2a) qui en fonctionnement s'engage avec l'autre élément pour que le rotor (1) soit entraîné par le stator (2); et un moyen de commande de l'entraînement (103) agencé pour appliquer des ondes aux dits moyens vibreurs (107) de manière à entraîner le rotor (1), caractérisé en ce que les moyens vibreurs (107) comprennent une pluralité de vibreurs (108), le moyen de commande de l'entraînement (103) étant agencé pour appliquer une onde stationnaire à chacun des vibreurs (108) et pour provoquer un décalage de phase de ladite onde, de manière à entraîner le rotor (1) selon un mode pas à pas.

2. Article électronique d'horlogerie selon la revendication 1, caractérisé en ce que des moyens élastiques (9) sont prévus pour pousser le rotor (1) et le stator (2) en contact mutuel.

3. Article électronique d'horlogerie selon la revendication 2, caractérisé en ce que le moteur comprend une plaquette de circuits imprimés (45) ayant une pluralité de motifs de circuits imprimés (46), ledit moyen élastique (9) pressant les motifs de circuit imprimés (46) et les électrodes (3a) des vibreurs (3) en contact électrique mutuel.

4. Article électronique d'horlogerie selon la revendication 3, caractérisé en ce que la plaquette de circuits imprimés (45) est disposée sur le même côté du stator (2) que les vibreurs (3).

5. Article électronique d'horlogerie selon l'une quelconque des revendications précédentes, caractérisé en ce que le stator (2) a une pluralité de saillies (2a) espacées à intervalles équidistants, les saillies (2a) du stator ayant des surfaces de contact (56) qui en fonctionnement s'engagent avec le rotor (1), la largeur (t) de chaque surface de contact (56) dans la direction de rotation du rotor (1) étant inférieure à l'espacement (h) entre les saillies adjacentes (2a) du stator.

6. Article électronique d'horlogerie selon l'une quelconque des revendications précédentes, caractérisé en ce que le rotor (1) entraîne un moyen d'engrenage indicateur de secondes (32, 33) comprenant une roue trotteuse (32) qui est dans un plan différent aussi bien de celui du rotor (1) que du stator (2).

7. Article électronique d'horlogerie selon l'une quelconque des revendications précédentes, caractérisé en ce que le rotor (1) entraîne un moyen d'engrenage indicateur de minutes (36, 37) comprenant une roue de centre (37) qui est disposée au centre de l'article d'horlogerie et qui est positionnée dans un plan différent de celui du stator (2).

8. Article électronique d'horlogerie selon la revendication 7, caractérisé en ce que la roue de centre (37) entraîne un moyen d'engrenage indicateur des heures (38) au moyen d'une roue de minuterie (314) qui est dans le même plan que le stator (2), mais espacée de celui-ci.

9. Article électronique d'horlogerie selon l'une quelconque des revendications précédentes, caractérisé en ce que le moteur à ultrasons (1, 2, 103, 107, 108) est alimenté par une pile (321) qui est agencée de manière à ce que la pile (321) et le stator (2) ne soient pas placés l'un au-dessus de l'autre.

10. Article électronique d'horlogerie selon l'une quelconque des revendications 1 - 8, caractérisé en ce que le moteur à ultrasons (1, 2, 103, 107, 108) et les moyens donnant le temps (39 - 41) sont agencés d'une manière sensiblement centrale sur l'article d'horlogerie, le moteur étant alimenté en courant par une pile (415) dont au moins une partie est disposée au-dessus du moteur (1, 2, 103, 107, 108).

11. Un article électronique d'horlogerie ayant un moteur à ultrasons comprenant un stator (2) pourvu de moyens vibreurs (107) pour exciter le stator (2); d'un élément mobile (1) agencé pour entraîner les moyens donnant le temps (39 - 41) de l'article d'horlogerie, l'élément mobile (1) et/ou le stator (2) ayant au moins une portion (1a - 1d. 2a) qui en fonctionnement s'engage avec l'autre élément, de sorte que l'élément mobile (1) est entraîné par le stator (2); et d'un moyen de commande de l'entraînement (103) agencé pour appliquer des ondes aux dits moyens vibreurs (107) de manière à entraîner l'élément mobile (1), caractérisé en ce que chacune desdites portions (1a - 1d, 2a) est constituée par une saillie de l'élément mobile (1) ou du stator (2).
